# EUROPEAN PATENT APPLICATION

(11) **EP 4 618 652 A1**
(43) Date of publication of application: **17.09.2025**
(21) Application number: 22964779.7
(22) Date of filing: 09.11.2022
(51) Int. Cl.: H04W 72/04

(54) **REFERENCE SIGNAL CONFIGURATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN); LIU, Yang, Dongguan, Guangdong 523860 (CN)
(74) Representative: Mewburn Ellis LLP
(86) International application number: PCT/CN2022/130976
(87) International publication number: WO 2024/098305

(57) **Abstract**

The present disclosure discloses a configuration method of a reference signal, an apparatus, a device and a storage medium, and relates to the field of mobile communications. The method includes: transmitting configuration information of a reference signal to a target device, where the reference signal is transmitted via a first link, and the target device is a device outside the first link. In the technical solutions provided in the embodiments of the present disclosure, through transmitting the configuration information of the reference signal to the target device, the target device outside the first link where the reference signal is located can obtain the configuration information of the reference signal, so that the target device performs measurement on the reference signal, thereby avoiding a situation where the target device is unable to measure the reference signal, and improving the performance of measuring the reference signal in a collaborative sensing scenario or a hybrid positioning scenario.

## Description

### TECHNICAL FIELD

The present disclosure relates to the field of mobile communications, and in particular, to a configuration method of a reference signal, an apparatus, a device and a storage medium.

### BACKGROUND

In a collaborative sensing scenario, collaboration between a base station and multiple terminals may be required to perform sensing measurement.

In the related art, since frequency-domain resources of different terminals are orthogonal, or a network device is unaware of a time-frequency resource autonomously selected by a terminal, collaborative measurement on a reference signal cannot be achieved.

### SUMMARY

Embodiments of the present disclosure provide a configuration method of a reference signal, an apparatus, a device, and a storage medium. The technical solutions are as follows.

According to an aspect of the embodiments of the present disclosure, a configuration method of a reference signal is provided, the method is performed by a first terminal, and the method includes:
transmitting configuration information of the reference signal to a target device,
where the reference signal is transmitted via a first link, and the target device is a device outside the first link.

According to another aspect of the embodiments of the present disclosure, a configuration method of a reference signal is provided, the method is performed by a second terminal, and the method includes:
transmitting or receiving configuration information of the reference signal,
where the reference signal is transmitted via a first link, and a target device receiving the configuration information is a device outside the first link.

According to yet another aspect of the embodiments of the present disclosure, a configuration method of a reference signal is provided, the method is performed by a first network element or a second network element, and the method includes:
transmitting or receiving configuration information of the reference signal,
where the reference signal is transmitted via a first link, and a target device receiving the configuration information is a device outside the first link.

According to yet another aspect of the embodiments of the present disclosure, a configuration apparatus of a reference signal is provided, and the apparatus includes:
a transmitting module, configured to transmit configuration information of the reference signal to a target device,
where the reference signal is transmitted via a first link, and the target device is a device outside the first link.

According to yet another aspect of the embodiments of the present disclosure, a configuration apparatus of a reference signal is provided, and the apparatus includes:
a transceiver module, configured to transmit or receive configuration information of the reference signal,
where the reference signal is transmitted via a first link, and a target device receiving the configuration information is a device outside the first link.

According to yet another aspect of the embodiments of the present disclosure, a configuration apparatus of a reference signal is provided, and the apparatus includes:
a transceiver module, configured to transmit or receive configuration information of the reference signal,
where the reference signal is transmitted via a first link, and a target device receiving the configuration information is a device outside the first link.

According to yet another aspect of the embodiments of the present disclosure, a communication device is provided. The communication device includes a processor and a memory, the memory has stored a computer program therein, and the processor executes the computer program to implement the configuration method of the reference signal described above.

According to yet another aspect of the embodiments of the present disclosure, a computer-readable storage medium is provided. The storage medium has stored a computer program therein, and the computer program is configured to be executed by a processor to implement the configuration method of the reference signal described above.

According to yet another aspect of the embodiments of the present disclosure, a chip is provided. The chip includes a programmable logic circuit and/or program instructions; and the chip, when being run, implements the configuration method of the reference signal described above.

According to yet another aspect of the embodiments of the present disclosure, a computer program product or a computer program is provided, which includes computer instructions stored in a computer-readable storage medium. A processor reads and executes the computer instructions from the computer-readable storage medium to implement the configuration method of the reference signal described above.

The technical solutions provided in the embodiments of the present disclosure can bring beneficial effects as follows.

Through transmitting the configuration information of the reference signal to the target device, the target device outside the first link where the reference signal is located can obtain the configuration information of the reference signal, so that the target device performs measurement on the reference signal, thereby avoiding a situation where the target device is unable to measure the reference signal, and improving the performance of measuring the reference signal in a collaborative sensing scenario or a hybrid positioning scenario.

### BRIEF DESCRIPTION OF THE DRAWINGS

In order to describe technical solutions in the embodiments of the present disclosure more clearly, drawings to be used in the description of the embodiments will be briefly described hereinafter. It is apparent that the drawings to be described below are merely some embodiments of the present disclosure. For those ordinary skilled in the art, other drawings can be obtained based on these drawings without paying creative efforts.
FIG. 1 is a schematic diagram illustrating communication network architecture provided in an embodiment of the present disclosure.
FIG. 2 is a schematic diagram illustrating network architecture of a collaborative sensing scenario provided in an embodiment of the present disclosure.
FIG. 3 is a schematic diagram illustrating network architecture of a hybrid positioning scenario provided in an embodiment of the present disclosure.
FIG. 4 is a flowchart of a configuration method of a reference signal provided in an embodiment of the present disclosure.
FIG. 5 is a flowchart of a configuration method of a reference signal provided in an embodiment of the present disclosure.
FIG. 6 is a flowchart of a configuration method of a reference signal provided in an embodiment of the present disclosure.
FIG. 7 is a flowchart of a configuration method of a reference signal provided in an embodiment of the present disclosure.
FIG. 8 is a flowchart of a configuration method of a reference signal provided in an embodiment of the present disclosure.
FIG. 9 is a flowchart of a configuration method of a reference signal provided in an embodiment of the present disclosure.
FIG. 10 is a flowchart of a configuration method of a reference signal provided in an embodiment of the present disclosure.
FIG. 11 is a flowchart of a configuration method of a reference signal provided in an embodiment of the present disclosure.
FIG. 12 is a flowchart of a configuration method of a reference signal provided in an embodiment of the present disclosure.
FIG. 13 is a flowchart of a configuration method of a reference signal provided in an embodiment of the present disclosure.
FIG. 14 is a flowchart of a configuration method of a reference signal provided in an embodiment of the present disclosure.
FIG. 15 is a flowchart of a configuration method of a reference signal provided in an embodiment of the present disclosure.
FIG. 16 is a flowchart of a configuration method of a reference signal provided in an embodiment of the present disclosure.
FIG. 17 is a flowchart of a configuration method of a reference signal provided in an embodiment of the present disclosure.
FIG. 18 is a flowchart of a configuration method of a reference signal provided in an embodiment of the present disclosure.
FIG. 19 is a flowchart of a configuration method of a reference signal provided in an embodiment of the present disclosure.
FIG. 20 is a flowchart of a configuration method of a reference signal provided in an embodiment of the present disclosure.
FIG. 21 is a flowchart of a configuration method of a reference signal provided in an embodiment of the present disclosure.
FIG. 22 is a flowchart of a configuration method of a reference signal provided in an embodiment of the present disclosure.
FIG. 23 is a flowchart of a configuration method of a reference signal provided in an embodiment of the present disclosure.
FIG. 24 is a block diagram of a configuration apparatus of a reference signal provided in an embodiment of the present disclosure.
FIG. 25 is a block diagram of a configuration apparatus of a reference signal provided in an embodiment of the present disclosure.
FIG. 26 is a block diagram of a configuration apparatus of a reference signal provided in an embodiment of the present disclosure.
FIG. 27 is a schematic diagram illustrating a structure of a communication device provided in an embodiment of the present disclosure.

### DETAILED DESCRIPTION

In order to make the objectives, technical solutions and advantages of the present disclosure more clear, the embodiments of the present disclosure will be further described in detail in conjunction with the drawings hereinafter. Exemplary embodiments will be described in detail here, and examples of the embodiments are illustrated in the drawings. When the following description involves the drawings, the identical number in different drawings represents a same or similar element unless otherwise stated. Implementations described in the following exemplary embodiments do not represent all implementations consistent with the present disclosure. Instead, the implementations described in the following exemplary embodiments are merely examples of apparatuses and methods consistent with some aspects of the present disclosure as recited in the appended claims.

The network architecture and service scenarios described in the embodiments of the present disclosure are intended to more clearly describe the technical solutions of the embodiments of the present disclosure, and do not constitute limitations on the technical solutions provided in the embodiments of the present disclosure. Those ordinary skilled in the art can understand that, with the evolution of network architecture and the emergence of new service scenarios, the technical solutions provided in the embodiments of the present disclosure are also applicable to similar technical problems. Terminologies used in the present disclosure are merely for the purpose of describing certain embodiments and are not to limit the present disclosure. The singular forms, such as "a/an", "said", and "the" used in the present disclosure and the appended claims are intended to include the plural forms as well, unless the context clearly indicates other meanings. It should also be understood that the term "and/or" used herein refers to and encompasses any and all possible combinations of one or more of associated listed items.

It should be understood that although the terms such as "first" and "second" may be used in the present disclosure to describe various kind of information, such information should not be limited to these terms. These terms are merely used to distinguish pieces of information of the same type from each other. For example, without departing from the scope of the present disclosure, a first parameter may also be called a second parameter, and similarly, the second parameter may also be called the first parameter. Depending on the context, the term "if" as used herein may be interpreted as "in a case where" or "when" or "in response to determining".

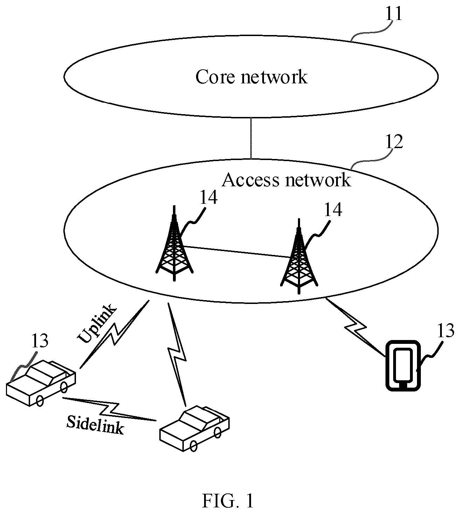

FIG. 1 shows a schematic diagram of communication network architecture provided in an exemplary embodiment of the present disclosure. The communication network architecture may include: a core network 11, an access network 12 and a terminal 13.

The core network 11 includes several core network devices. The functions of the core network device are mainly to provide user connection, user management and service bearing, and to provide an interface to external networks as a bearer network. For example, in a new radio (NR) system of the fifth generation (5G) mobile communication technology, the core network may include devices such as an access and mobility management function (AMF) entity, a user plane function (UPF) entity and a session management function (SMF) entity. Since radio electromagnetic wave signals employed by a cellular network can not only be used for wireless data transmission and communication, but also have environmental sensing capabilities, such as recognition for user motion or gesture, breathing monitoring, measurement on terminal's movement speed, environmental imaging, and weather monitoring. Therefore, future cellular networks can be considered not only for the communication and data transmission, but also for the acquisition of sensing information.

At present, supporting the sensing capability in a beyond 5G (B5G) network is being discussed, and through the addition of a sensing control network element (SF) and corresponding process, the sensing function is to be supported in the 3rd generation partnership project (3GPP) network. In the implementation of the sensing function, sensing measurement may be classified, according to different sensing targets, into active sensing and passive sensing. A sensing target of the active sensing is UE (that is, the active sensing is UE-level sensing), and a sensing target of the passive sensing is a target area or a target object (that is, there is no specific UE in area-level sensing, which does not belong to 3GPP).

The access network 12 includes several access network devices 14. An access network in the 5G NR system may be called a new generation-radio access network (NG-RAN). The access network device 14 is an apparatus deployed in the access network 12 to provide a wireless communication function for the terminal 13. The access network devices 14 may include various forms of macro base stations, micro base stations, relay stations, and access points. In systems employing different wireless access technologies, the name of a device having functions of the access network device may vary. For example, in the 5G NR system, such a device is called a 5G base station (next generation node B, gNodeB or gNB). The name "access network device" may vary with the evolution of communication technology. For the convenience of description, in the embodiments of the present disclosure, the above-mentioned apparatuses that provide the wireless communication function for the terminal 13 are collectively called the access network devices.

The number of terminals 13 is usually multiple, and one or more terminals 13 may be distributed in a cell managed by each access network device 14. The terminals 13 may include a variety of handheld devices, vehicle-mounted devices, wearable devices, computing devices or other processing devices connected to wireless modems, which have the wireless communication function, as well as various forms of user equipment and mobile stations (MSs). For the convenience of description, the above-mentioned devices are collectively called the terminals. The access network device 14 and the core network device communicate with each other through a certain type of air technology, e.g., an NG interface in the 5G NR system. The access network device 14 and the terminal 13 communicate with each other through a certain type of air technology, e.g., a Uu interface.

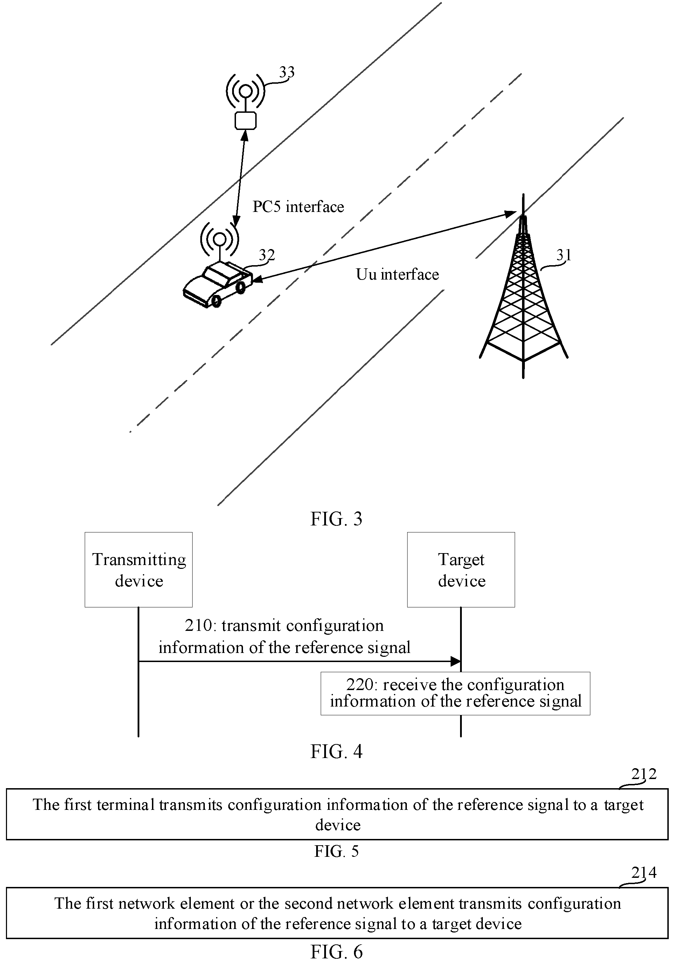

The two terminals 13 (for example, the vehicle-mounted device and another device (such as, another vehicle-mounted device, a mobile phone, or a road side unit (RSU))) may communicate with each other through a direct communication interface (e.g., a PC5 interface). Accordingly, a communication link established based on the direct communication interface may be called a direct link or a sidelink (SL). SL transmission means that communication data transmission is directly performed between the terminals via the sidelink. Different from the case that communication data is received or transmitted via the access network device in the traditional cellular system, the SL transmission has the characteristics of a short delay and low overhead, and is suitable for communication between two terminals with close geographical locations (e.g., the vehicle-mounted device and another peripheral device with close geographical location). It should be noted that in the FIG. 3, only vehicle-to-vehicle communication in the V2X scenario is taken as an example. SL technology may be applied to the scenario where direct communication is performed between various types of terminals. In other words, the terminal in the present disclosure refers to any device that performs communication by means of the SL technology. The "5G NR system" in the embodiments of the present disclosure may also be called a 5G system or an NR system, and those skilled in the art may understand meaning thereof. The technical solutions described in the embodiments of the present disclosure may be applied to the 5G NR system, and may also be applied to a subsequent evolution system of the 5G NR system. The UE and the terminal in the embodiments of the present disclosure represent the same meaning and are interchangeable.

Firstly, a collaborative sensing scenario and a hybrid positioning scenario are introduced.

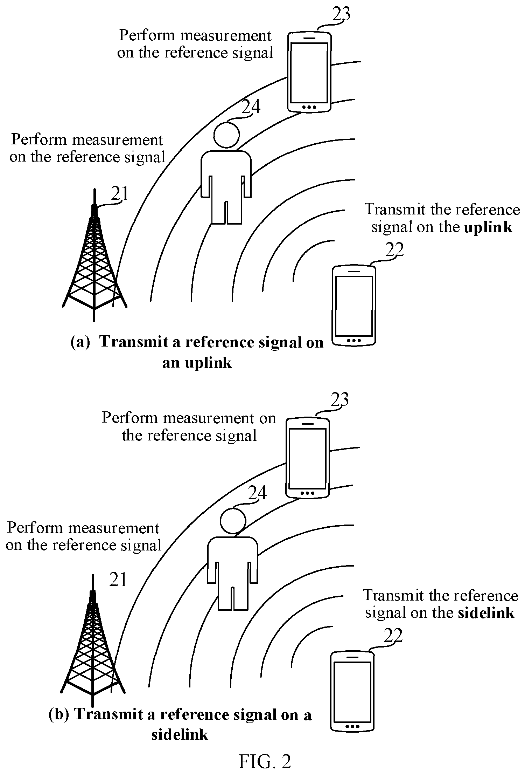

Collaborative sensing scenario: communication sensing is that a base station or a terminal transmits a communication signal to detect and estimate a target, determine whether the target exists, and estimate information such as speed of the target, a distance between the target and the base station or the terminal, and a direction angle of the incoming wave of the target. The target may be a human body or an object, which is used to realize functions such as detection of intrusion, movement or fall of human, posture recognition, and image establishment of an object in three-dimensional space. Taking into account the characteristic that there are multiple communication nodes in a mobile communication network, the multiple nodes may communicate and collaborate with each other, and with the help of multi-node collaboration, sensing performance may be improved, so as to achieve multi-node-based collaborative sensing. FIG. 2 shows a schematic diagram of a network architecture of a collaborative sensing scenario, where (a) transmitting a reference signal on an uplink shows that the first terminal 22 transmits the reference signal on the uplink, and the second terminal 23 and a network device 21 perform measurement on the reference signal to sense a target 24 in the environment, which achieves collaborative sensing; and (b) transmitting a reference signal on a sidelink shows that the first terminal 22 transmits the reference signal on the sidelink, and the second terminal 23 and the network device 21 perform measurement on the reference signal to sense the target 24 in the environment, which achieves collaborative sensing.

Hybrid positioning scenario: hybrid positioning is that the base station and the terminal perform positioning for a target terminal based on the Uu interface and the PC5 interface. The target terminal transmits a reference signal, and the base station and the terminal measure the target terminal by performing measurement on the reference signal. FIG. 3 shows a schematic diagram of network architecture of the hybrid positioning scenario. A base station 31 and an anchor terminal 33 provide a positioning service for a target vehicle-mounted terminal 32; the anchor terminal 33 positions the target vehicle-mounted terminal 32 through the PC5 interface, and the base station 31 positions the target vehicle-mounted terminal 32 through the Uu interface. Similarly, the reference signal transmitted from the target vehicle-mounted terminal 32 is transmitted on the uplink or the sidelink. For example, a positioning manner employed in the hybrid positioning scenario includes, but is not limited to, at least one of the following: an uplink-time difference of arrival (UL-TDOA) positioning manner or a multi-round trip time (multi-RTT) positioning manner.

FIG. 4 provides a flowchart of a configuration method of a reference signal provided in an embodiment of the present disclosure, and the method is performed by a first terminal, a second terminal and a target device. A network device in the method may be a device in an access network or a core network, and network device(s) include a first network element and/or a second network element. The first network element is an access network device, and the second network element is a core network device. The method includes the following.

**Step 210:** a transmitting device transmits configuration information of the reference signal to the target device.

In the embodiment, the reference signal is used for collaborative sensing or hybrid positioning. The reference signal is transmitted via a first link, and the target device is a device outside the first link.

In some embodiments, the first link is an uplink, and the reference signal is transmitted via the uplink. Optionally, the reference signal is transmitted from the first terminal to the first network element or the second network element, and the first link is an uplink between the first terminal and the first network element. Accordingly, the target device is a device outside the first link, e.g., the second terminal. The transmitting device transmits the configuration information of the reference signal to the second terminal, which is, for example, that the first terminal transmits the configuration information of the reference signal to the second terminal via a sidelink, or that the first network element or the second network element transmits the configuration information of the reference signal to the second terminal via a downlink.

In some embodiments, the first link is the sidelink, and the reference signal is transmitted via the sidelink. Optionally, the reference signal is transmitted from the first terminal to the second terminal, and the first link is a sidelink between the first terminal and the second terminal. Accordingly, the target device is a device outside the first link, e.g., the first network element or the second network element. The transmitting device transmits the configuration information of the reference signal to the first network element or the second network element, which is, for example, that the first terminal or the second terminal transmits the configuration information of the reference signal to the first network element or the second network element.

Exemplarily, the first network element is an access network device, e.g., a gNB. The second network element is a core network device, e.g., any one of a location management function (LMF), an access and mobility management function (AMF), and a sensing function (SF) network element.

It shall be understood that a limit that the target device is a device outside the first link is made in the present disclosure only. That is, the device receiving the configuration information is outside the first link. However, there is no limitation on a transmitter (or called a transmitting device) of the configuration information. The transmitter is generally located on the first link and may be a transmitting device or a receiving device of the reference signal on the first link. Certainly, the transmitter of the configuration information may be outside the first link. For example, the transmitter may an LMF.

**Step 220:** the target device receives the configuration information of the reference signal.

Accordingly, the target device receives the configuration information of the reference signal transmitted from the transmitting device. The target device performs measurement on the reference signal based on the configuration information of the reference signal, so as to achieve collaborative sensing or hybrid positioning.

To sum up, in the method provided in the embodiment, through transmitting the configuration information of the reference signal to the target device, the target device outside the first link where the reference signal is located can obtain the configuration information of the reference signal, so that the target device performs measurement on the reference signal, thereby avoiding a situation where the target device is unable to measure the reference signal, and improving the performance of measuring the reference signal in the collaborative sensing scenario or the hybrid positioning scenario.

The present disclosure includes at least two scenarios: the first link being the uplink, and the first link being the sidelink. The two scenarios will be described hereinafter.

**For a case where the first link is an uplink:**
The target device includes the second terminal, and a device transmitting the configuration information to the target device includes: a first terminal, a first network element, or a second network element. The above terminal and network device are described respectively.

FIG. 5 provides a flowchart of a configuration method of a reference signal provided in an embodiment of the present disclosure. The method is performed by the first terminal, and the method includes the following.

**Step 212:** the first terminal transmits configuration information of the reference signal to a target device.

Exemplarily, the embodiment is performed by the first terminal, and the target device in the embodiment is the second terminal. That is, the first terminal transmits the configuration information of the reference signal to the second terminal.

Exemplarily, the reference signal is transmitted via the first link. For example, the first link is the uplink. The target device is a device outside the first link, and the reference signal is transmitted from the first terminal to the first network element or the second network element via the uplink.

The second terminal also needs to perform measurement on the reference signal in the case of collaborative sensing or hybrid positioning; and therefore, the configuration information of the reference signal is transmitted from the first terminal to the second terminal via the sidelink.

Exemplarily, the first terminal transmits the configuration information of the reference signal to the target device, where the configuration information includes at least one of information related to a time-frequency resource of the reference signal or information related to measurement of the reference signal.

In some embodiments, the configuration information of the reference signal includes first configuration and second configuration. The first terminal transmits the first configuration and the second configuration to the second terminal. It shall be noted that the first configuration and the second configuration are only classified based on configuration types, and the first terminal may carry the first configuration and the second configuration through one piece of signaling, or split the first configuration and the second configuration and then transmit the first configuration and the second configuration to the target device through multiple pieces of signaling.

Exemplarily, the first configuration is used to indicate a time-frequency resource for the first terminal transmitting the reference signal, and the second configuration is used to indicate configuration for the second terminal performing the measurement on the reference signal. The second configuration is used to indicate configuration of a measurement gap, and the measurement gap is used to indicate a time window for the second terminal performing the measurement on the reference signal.

By means of the first configuration and the second configuration, the time-frequency resource for the first terminal transmitting the reference signal and the configuration for the second terminal performing the measurement on the reference signal are respectively indicated. The first configuration is used for the second terminal to determine the time-frequency resource of the reference signal, so as to help the second terminal perform the measurement on the reference signal; and the second configuration is used to indicate a measurement manner of the reference signal performed by the second terminal.

In an optional design, the first configuration includes but is not limited to at least one of the following:
time-domain length information of the reference signal, which is, for example, indicated by using the number of consecutive orthogonal frequency division multiplexing (OFDM) symbols occupied by the reference signal resource;
a time-domain starting position of the reference signal, which is used for indicating a starting position of a time-domain resource in transmission resources occupied by the reference signal;
a frequency-domain starting position of the reference signal, which is used for indicating a starting position of a frequency-domain resource in transmission resources occupied by the reference signal; or
a transmission period of the reference signal, which is used for indicating an interval time of a periodic transmission of the reference signal.

In another optional design, the second configuration includes but is not limited to at least one of the following:
a length of the measurement gap (mgl), which is used for indicating a length of the measurement gap in time domain;
a repetition period of the measurement gap (mgrp), which is used for indicating an interval time between starting positions of adjacent measurement gaps when the reference signal is periodically measured;
a timing advance of the measurement gap (mgta), which is used for indicating time for initiating the measurement prior to a subframe boundary where the measurement gap begins (for example, the timing advance of the measurement gap is 0 ms, 0.25 ms, 0.5 ms, or 0.75 ms); or
a time-domain offset of the measurement gap (gapOffset), which is used for indicating an offset between a starting position of the measurement gap and a reference position. Optionally, the reference position may be a position of Symbol 0 in a subframe or a time slot.

It shall be noted that the second terminal performs the measurement on the reference signal within the measurement gap, and there are one or more reference signals within the time window corresponding to the measurement gap.

To sum up, in the method provided in the embodiment, through transmitting the configuration information of the reference signal to the second terminal, the second terminal outside the uplink where the reference signal is located determines the configuration information of the reference signal, so as to help the second terminal perform the measurement on the reference signal, thereby avoiding the situation where the second terminal is unable to measure the reference signal, and improving the performance of measuring the reference signal in the collaborative sensing scenario or the hybrid positioning scenario.

FIG. 6 provides a flowchart of a configuration method of a reference signal provided in an embodiment of the present disclosure, and the method is performed by a network device. The network device in the method may be a device in an access network or a core network. Network devices include a first network element and a second network element. The method includes the following.

**Step 214:** the first network element or the second network element transmits configuration information of the reference signal to a target device.

The embodiment is performed by the first network element or the second network element. The first network element includes a gNB, and the second network element includes any one of an LMF, an AMF and an SF. The target device in the embodiment is a second terminal. That is, the first network element or the second network element transmits the configuration information of the reference signal to the second terminal.

Exemplarily, the reference signal is transmitted via a first link. For example, the first link is an uplink. The target device is a device outside the first link, and the reference signal is transmitted from a first terminal to the first network element or the second network element.

The second terminal also needs to perform measurement on the reference signal in a case of collaborative sensing or hybrid positioning; and therefore, the configuration information of the reference signal is transmitted from the first network element or the second network element to the second terminal via a downlink.

Exemplarily, the first network element or the second network element transmits the configuration information of the reference signal to the target device, where the configuration information includes at least one of information related to a time-frequency resource of the reference signal or information related to measurement of the reference signal.

In some embodiments, the configuration information of the reference signal includes first configuration and second configuration. The first network element or the second network element transmits the first configuration and the second configuration to the second terminal. Similar to the above, the first configuration and the second configuration are only classified based on configuration types, and the first network element or the second network element may carry the first configuration and the second configuration through one piece of signaling, or split the first configuration and the second configuration and then transmit the first configuration and the second configuration to the target device through multiple pieces of signaling. For the introduction of the first configuration and the second configuration, reference can be made to the above embodiment of FIG. 5, which will not be repeated in the embodiment.

In an optional design, the embodiment further includes the following steps.

The first network element receives a first measurement result.

Exemplarily, the first measurement result is obtained by the second terminal by performing the measurement on the reference signal based on the first configuration and the second configuration. The second terminal performs the measurement on the reference signal within the measurement gap, and there are one or more reference signals within the time window corresponding to the measurement gap.

In an optional design, the first measurement result includes but is not limited to at least one of following information of the reference signal: a reference signal received power (RSRP), a delay, a Doppler shift, channel information, a distance, a speed, an orientation, or acceleration.

The first network element reports the first measurement result to the second network element.

Exemplarily, the second network element includes any one of an LMF, an AMF and an SF. The first network element reports the first measurement result to the second network element, and accordingly, the second network element receives the first measurement result transmitted from the first network element.

To sum up, in the method provided in the embodiment, through transmitting the configuration information of the reference signal to the second terminal, the second terminal outside the uplink where the reference signal is located determines the configuration information of the reference signal, so as to help the second terminal perform the measurement on the reference signal, thereby avoiding the situation where the second terminal is unable to measure the reference signal, and improving the performance of measuring the reference signal in the collaborative sensing scenario or the hybrid positioning scenario.

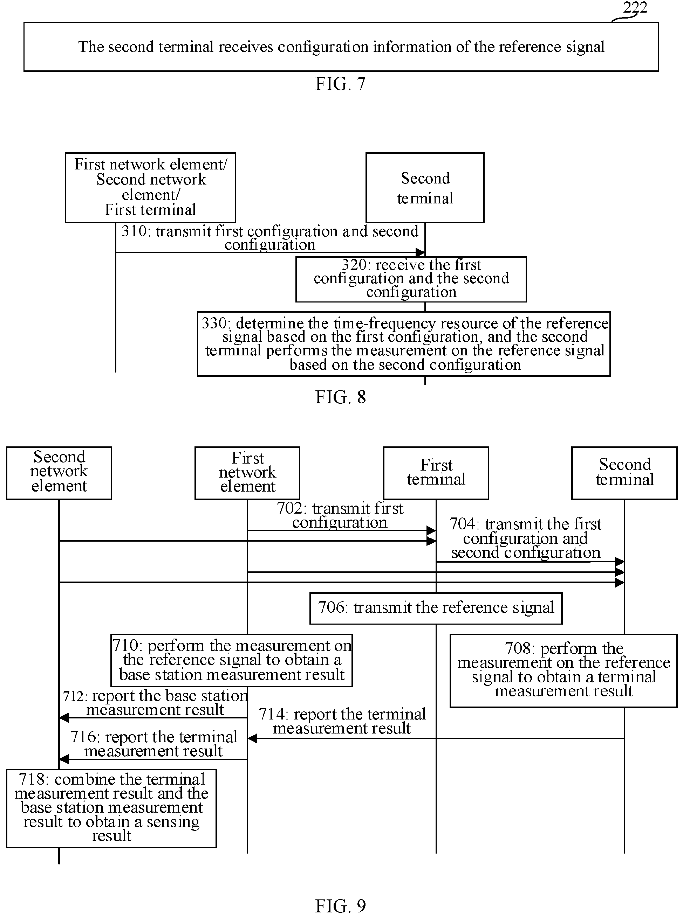

FIG. 7 provides a flowchart of a configuration method of a reference signal provided in an embodiment of the present disclosure. The method is performed by a second terminal, and the method includes the following.

**Step 222:** the second terminal receives configuration information of the reference signal.

The embodiment is performed by the second terminal, and a target device in the embodiment is the second terminal. That is, the second terminal receives the configuration information of the reference signal. A transmitter of the configuration information is a first terminal, a first network element, or a second network element.

Exemplarily, the reference signal is transmitted via a first link. For example, the first link is an uplink. The target device is a device outside the first link, and the reference signal is transmitted from the first terminal to the first network element or the second network element.

The second terminal receives the configuration information of the reference signal transmitted from the first terminal via a sidelink. Alternatively, the second terminal receives the configuration information of the reference signal transmitted from the first network element or the second network element via a downlink.

Exemplarily, the second terminal receives the configuration information of the reference signal, and the configuration information includes at least one of information related to a time-frequency resource of the reference signal or information related to measurement of the reference signal.

In some embodiments, the configuration information of the reference signal includes first configuration and second configuration. The second terminal receives the first configuration and the second configuration. Similar to the above, the first configuration and the second configuration are only classified based on configuration types, and the first configuration and the second configuration that are received by the second terminal may be carried in one piece of signaling or carried in multiple pieces of signaling. For the introduction of the first configuration and the second configuration, reference can be made to the above embodiment of FIG. 5, which will not be repeated in the embodiment.

In an optional design, the embodiment further includes the following steps.

The second terminal performs measurement on the reference signal based on the first configuration and the second configuration, to obtain a first measurement result.

Exemplarily, the second terminal performs the measurement on the reference signal within the measurement gap, and there are one or more reference signals within the time window corresponding to the measurement gap.

The second terminal transmits the first measurement result to the first network element.

Exemplarily, the first network element is an access network device, such as a gNB. The first measurement result is a measurement result of the second terminal on the reference signal.

In an optional design, the first measurement result includes but is not limited to at least one of the following information of the reference signal: a RSRP, a delay, a Doppler shift, channel information, a distance, a speed, an orientation, or acceleration.

To sum up, in the method provided in the embodiment, through receiving the configuration information of the reference signal by the second terminal, the second terminal outside the uplink where the reference signal is located determines the configuration information of the reference signal, so as to help the second terminal perform the measurement on the reference signal, thereby avoiding the situation where the second terminal is unable to measure the reference signal, and improving the performance of measuring the reference signal in the collaborative sensing scenario or the hybrid positioning scenario.

FIG. 8 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 310:** the first network element, the second network element or the first terminal transmits first configuration and second configuration to the second terminal.

The first network element is an access network device, e.g., a gNB. The second network element is a core network device, e.g., any one of an LMF, an AMF and an SF.

In some embodiments, in a case where the first terminal is a vehicle-mounted terminal, the second terminal is implemented as a road side unit (RSU); or, both the first terminal and the second terminal are vehicle-mounted terminals.

In some embodiments, in a case where the first terminal transmits the configuration information of the reference signal to the second terminal, all or part of the configuration information of the reference signal on the first terminal side comes from the first network element or the second network element, and after the first terminal receives the configuration information of the reference signal transmitted from the first network element or the second network element, the first terminal forwards the configuration information of the reference signal to the second terminal. Exemplarily, the configuration information of the reference signal includes the first configuration and the second configuration.

The first configuration is used to indicate a time-frequency resource for the first terminal transmitting the reference signal, and the time-frequency resource of the reference signal is scheduled by the first network element or the second network element to the first terminal. The reference signal is carried in an uplink resource for transmission. The first terminal transmits the reference signal to the network device on the uplink resource, and meanwhile the reference signal needs to be received by the second terminal. The first terminal transmits the first configuration to the second terminal, so as to enable the second terminal to determine the time-frequency resource of the reference signal, which helps the second terminal receive the reference signal.

The second configuration is used to indicate configuration for the second terminal performing measurement on the reference signal. The second configuration is used to indicate configuration of a measurement gap, and the measurement gap is used to indicate a time window for the second terminal performing the measurement on the reference signal.

**Step 320:** the second terminal receives the first configuration and the second configuration.

Exemplarily, the first configuration is used to indicate the time-frequency resource for the first terminal transmitting the reference signal, and the second configuration is used to indicate the configuration for the second terminal performing the measurement on the reference signal.

**Step 330:** the second terminal determines the time-frequency resource of the reference signal based on the first configuration, and the second terminal performs the measurement on the reference signal based on the second configuration.

Exemplarily, the second terminal performs the measurement on the reference signal to obtain a first measurement result, and the first measurement result includes but is not limited to at least one of following information of the reference signal: a reference signal received power (RSRP), a delay, a Doppler shift, channel information, a distance, a speed, an orientation, or acceleration.

The first measurement result is used for collaborative sensing or hybrid positioning.

To sum up, in the method provided in the embodiment, by means of the first configuration and the second configuration, the time-frequency resource for the first terminal transmitting the reference signal and the configuration for the second terminal performing the measurement on the reference signal are respectively indicated. The first configuration is used for the second terminal to determine the time-frequency resource of the reference signal, so as to help the second terminal perform the measurement on the reference signal; and the second configuration is used to indicate a measurement manner of the reference signal performed by the second terminal, thereby avoiding the situation where the reference signal cannot be measured, and improving the performance of measuring the reference signal.

FIG. 9 provides a flowchart of a configuration method of a reference signal provided in an embodiment of the present disclosure, and the method is performed by a first terminal, a second terminal and a network device. The network device in the method may be a device in an access network or a core network. Network devices include a first network element and a second network element. The method includes the following.

**Step 702:** the first network element or the second network element transmits first configuration to the first terminal.

Exemplarily, the first configuration is used to indicate a time-frequency resource for the first terminal transmitting the reference signal. The reference signal is carried in an uplink resource for transmission.

Exemplarily, the first network element includes a gNB; and the second network element includes any one of an LMF, an AMF and an SF. That is, the gNB, the AMF, the SF or the LMF transmits the first configuration to the first terminal, where the first configuration is used to indicate the time-frequency resource for the first terminal transmitting the reference signal. Accordingly, the first terminal receives the first configuration transmitted from the network device (the gNB, the AMF, the SF or the LMF).

Exemplarily, the first configuration includes but is not limited to at least one of: time-domain length information of the reference signal, a time-domain starting position of the reference signal, a frequency-domain starting position of the reference signal, or a transmission period of the reference signal.

**Step 704:** the first network element, the second network element or the first terminal transmits the first configuration and the second configuration to the second terminal.

Exemplarily, the second configuration is used to indicate configuration for the second terminal performing measurement on the reference signal.

Exemplarily, the second configuration includes but is not limited to at least one of the following: a length of the measurement gap, a repetition period of the measurement gap, a timing advance of the measurement gap, or a time-domain offset of the measurement gap.

Exemplarily, the measurement gap is used for the second terminal to perform the measurement on the reference signal transmitted from the first terminal within the measurement gap. Furthermore, the reference signal is an uplink reference signal.

Exemplarily, within the measurement gap, the second terminal does not process a downlink channel of the second terminal and signal(s) in the downlink channel, and the second terminal performs an intra-frequency measurement, inter-frequency measurement or inter-system measurement within the configured measurement gap, so as to achieve the measurement on the reference signal transmitted from the first terminal. Exemplarily, there are one or more reference signals within the time window corresponding to the measurement gap.

It shall be noted that, in a case where the first terminal transmits the first configuration and the second configuration to the second terminal, the second configuration is first configured to the first terminal by the first network element or the second network element, and subsequently transmitted or configured to the second terminal by the first terminal.

**Step 706:** the first terminal transmits the reference signal.

Exemplarily, the first terminal transmits the reference signal on the time-frequency resource indicated by the first configuration.

**Step 708:** the second terminal performs the measurement on the reference signal to obtain a terminal measurement result.

Exemplarily, the second terminal performs the measurement on the reference signal within the measurement gap based on the received first configuration and second configuration, to obtain the terminal measurement result. Exemplarily, the terminal measurement result obtained by the second terminal performing the measurement on the reference signal is also called the first measurement result.

Exemplarily, the terminal measurement result includes but is not limited to at least one of following information of the reference signal: a RSRP, a delay, a Doppler shift, channel information, a distance, a speed, an orientation, or acceleration.

**Step 710:** the first network element performs the measurement on the reference signal to obtain a base station measurement result.

Exemplarily, the first network element performs the measurement on the reference signal to obtain the base station measurement result. It shall be understood that the measurements on the reference signal by the first network element and the second terminal are independent of each other, and the terminal measurement result and the base station measurement result may be the same or different. Exemplarily, the base station measurement result obtained by the first network element performing the measurement on the reference signal is also called a second measurement result.

Exemplarily, the base station measurement result includes but is not limited to at least one of following information of the reference signal: a RSRP, a delay, a Doppler shift, channel information, a distance, a speed, an orientation, or acceleration.

**Step 712:** the first network element reports the base station measurement result to the second network element.

Exemplarily, the gNB reports the base station measurement result to the AMF/SF/LMF.

**Step 714:** the second terminal reports the terminal measurement result to the first network element.

Exemplarily, the second terminal reports the terminal measurement result to the gNB.

**Step 716:** the first network element reports the terminal measurement result to the second network element.

Exemplarily, the gNB reports the received terminal measurement result to the AMF/SF/LMF. That is, the second terminal reports the terminal measurement result to the AMF/SF/LMF through the gNB.

**Step 718:** the second network element combines the terminal measurement result and the base station measurement result to obtain a sensing result.

Exemplarily, the AMF/SF/LMF combines the terminal measurement result and base station measurement result that are generated by the second terminal and gNB respectively, to obtain a sensing result, thereby realizing collaborative sensing. In some embodiments, the second network element combines the terminal measurement result and the base station measurement result to obtain a positioning result.

To sum up, in the method provided in the embodiment, by means of the first configuration and the second configuration, the time-frequency resource for the first terminal transmitting the reference signal and the configuration for the second terminal performing the measurement on the reference signal are respectively indicated. The first configuration is used for the second terminal to determine the time-frequency resource of the reference signal, so as to help the second terminal perform the measurement on the reference signal; and the second configuration is used to indicate a measurement manner of the reference signal performed by the second terminal, thereby avoiding the situation where the reference signal cannot be measured, and improving the performance of measuring the reference signal.

**In the case where the first link is the uplink, there are at least four optional designs as follows.**

First optional design: requesting terminal information of the second terminal through first request information.

Second optional design: requesting the second terminal to perform measurement on the reference signal through second request information.

Third optional design: requesting network element information of the first network element through third request information.

Fourth optional design: requesting positioning capability information of the first terminal through fourth request information.

It shall be understood that the above four implementations may be combined arbitrarily to form new embodiments, and the present disclosure does not impose any limitations thereto.

Next, the above four implementations will be introduced respectively. It shall be noted that when an implementation is introduced, it is first introduced as a whole by means of one embodiment, and then introduced separately from different execution entities by means of two embodiments.

**First optional design: requesting the terminal information of the second terminal through the first request information.**

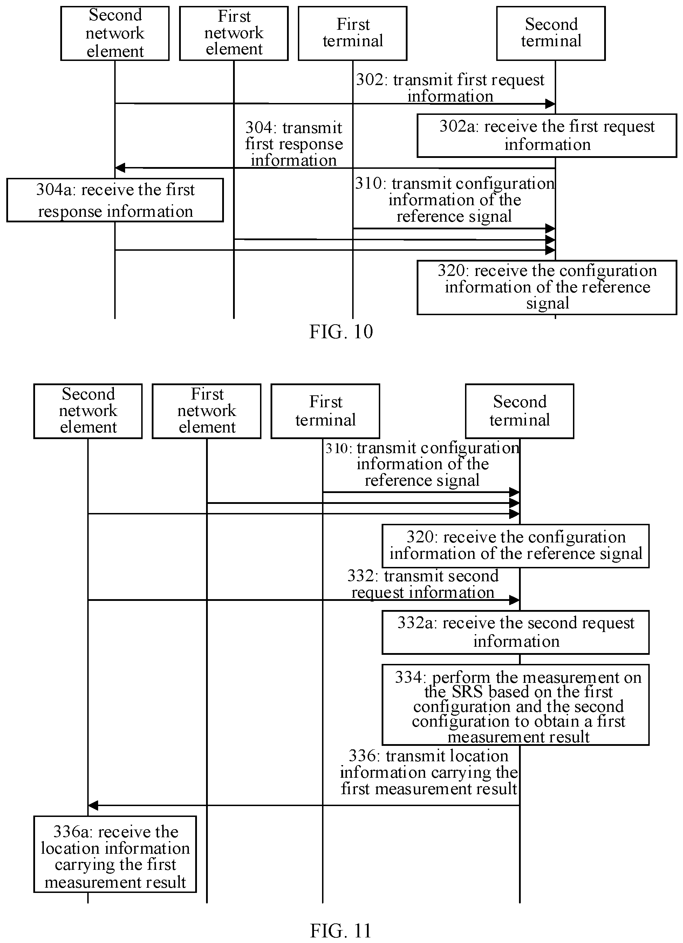

FIG. 10 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 302:** the second network element transmits first request information to the second terminal.

Exemplarily, the first request information is used to request the terminal information of the second terminal, and the terminal information includes identity information of the second terminal and/or geographic location information of the second terminal. Optionally, the terminal information is information of the second terminal that is required for measuring the reference signal in a manner of time difference of arrival (TDOA).

In an implementation, the second network element is an LMF, and the second terminal is an anchor terminal (anchor UE).

In an implementation, the second network element transmits long term evolution positioning protocol (LPP) signaling or sidelink positioning protocol (SLPP) signaling to the second terminal, and the LPP signaling or SLPP signaling carries the first request information; and the LPP signaling or SLPP signaling belongs to an LPP anchor UE information exchange process or an SLPP anchor UE information exchange process. In an implementation, the sidelink positioning protocol in the present disclosure may also be called ranging/sidelink positioning protocol (RSPP).

**Step 302a:** the second terminal receives the first request information transmitted from the second network element.

Corresponding to the second network element transmitting the first request information to the second terminal, the second terminal receives the first request information transmitted from the second network element.

**Step 304:** the second terminal transmits first response information to the second network element.

Exemplarily, the first response information carries the terminal information of the second terminal, and the terminal information includes the identity information of the second terminal and/or the geographic location information of the second terminal.

In an implementation, the second network element transmits LPP signaling or SLPP signaling to the second terminal, and the LPP signaling or SLPP signaling carries the first response information; and the LPP signaling or SLPP signaling belongs to an LPP anchor UE information exchange process or an SLPP anchor UE information exchange process.

In an implementation, the second terminal determines whether the second terminal itself is able to be a sensing node (that is, whether to participate in the measurement on the reference signal) according to the first request information transmitted from the second network element; if it is determined that the second terminal is able to be the sensing node participating in the measurement on the reference signal, the second terminal transmits the first response information to the second network element, where the first response information is further used to indicate that the second terminal participates in the measurement on the reference signal.

**Step 304a:** the second network element receives the first response information transmitted from the second terminal.

Corresponding to the second terminal transmitting the first response information to the second network element, the second network element receives the first response information transmitted from the second terminal.

**Step 310:** the first network element, the second network element or the first terminal transmits configuration information of the reference signal to the second terminal.

Exemplarily, the second terminal performs measurement on the reference signal based on the configuration information of the reference signal. Optionally, the configuration information includes first configuration and second configuration, the first configuration is used to indicate a time-frequency resource for the first terminal transmitting the reference signal, and the second configuration is used to indicate configuration for the second terminal performing the measurement on the reference signal.

**Step 320:** the second terminal receives the configuration information of the reference signal.

Accordingly, the second terminal receives the first configuration and the second configuration that are transmitted from the first network element, the second network element or the first terminal.

It shall be noted that the step 302a, step 304, and step 320 in the embodiment may be implemented together as an embodiment of the second terminal, and the step 302, step 304a, and step 310 in the embodiment may be implemented together as an embodiment of the first network element or the second network element.

To sum up, in the method provided in the embodiment, the terminal information of the second terminal is obtained based on the first request information, and the second terminal determines whether to perform the measurement on the reference signal based on the first request information and reports the result that the second terminal performs the measurement on the reference signal to the second network element, thereby avoiding the situation where the reference signal cannot be measured, and improving the performance of measuring the reference signal.

**Second optional design: requesting the second terminal to perform measurement on the reference signal through the second request information.**

FIG. 11 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 310:** the first network element, the second network element or the first terminal transmits configuration information of the reference signal to the second terminal.

Exemplarily, the second terminal performs the measurement on the reference signal based on the configuration information of the reference signal. Optionally, the configuration information includes first configuration and second configuration; the first configuration is used to indicate a time-frequency resource for the first terminal transmitting the reference signal, and the second configuration is used to indicate configuration for the second terminal performing the measurement on the reference signal.

**Step 320:** the second terminal receives the configuration information of the reference signal.

Accordingly, the second terminal receives the first configuration and the second configuration that are transmitted from the first network element, the second network element or the first terminal.

**Step 332:** the second network element transmits second request information to the second terminal.

Exemplarily, the second request information is used to request the second terminal to perform the measurement on the reference signal.

In an optional implementation, the reference signal includes a sounding reference signal (SRS). Furthermore, the second request information is used to request the second terminal to perform the measurement on the SRS with a first manner, which includes but is not limited to at least one of following manners: uplink-time difference of arrival (UL-TDOA), a multi-round trip time (multi-RTT) positioning manner, or a uplink-angle of arrival (UL-AoA) positioning manner.

In an implementation, the second network element is an LMF, and the second terminal is an anchor terminal (anchor UE).

In an implementation, the second network element transmits LPP signaling or SLPP signaling to the second terminal, and the first request information carried in the LPP signaling or SLPP signaling is request location information.

**Step 332a:** the second terminal receives the second request information transmitted from the second network element.

Corresponding to the second network element transmitting the second request information to the second terminal, the second terminal receives the second request information transmitted from the second network element.

**Step 334:** the second terminal performs the measurement on the SRS based on the first configuration and the second configuration to obtain a first measurement result.

The second terminal performs the measurement on the SRS transmitted from the first terminal within a measurement gap, and the obtained first measurement result is a TDOA measurement result of an uplink (UL).

The first measurement result includes but is not limited to at least one of following: uplink relative time of arrival (UL RTOA), or an UL-SRS-RSRP.

**Step 336:** the second terminal transmits location information carrying the first measurement result to the second network element.

In an implementation, the second terminal transmits LPP signaling or SLPP signaling to the second network element, and the location information carried in the LPP signaling or SLPP signaling is provide location information, and the provide location information indicates the first measurement result.

Optionally, the second terminal transmits the terminal information of the second terminal to the second network element, and the terminal information includes identity information of the second terminal and/or geographic location information of the second terminal. In an implementation, the second terminal transmits the terminal information in a case where the second terminal does not transmit the first response information.

**Step 336a:** the second network element receives the location information carrying the first measurement result transmitted from the second terminal.

Corresponding to the second terminal transmitting the location information carrying the first measurement result to the second network element, the second network element receives the location information carrying the first measurement result transmitted from the second terminal.

It shall be noted that the step 320, step 332a, step 334, and step 336 in the embodiment may be implemented together as an embodiment of the second terminal, and the step 310, step 332, and step 336a in the embodiment may be implemented together as an embodiment of the first network element or the second network element.

To sum up, in the method provided in the embodiment, the second terminal is requested to perform the measurement on the SRS in a manner of TDOA based on the second request information, thereby avoiding the situation where the reference signal cannot be measured, and improving the performance of measuring the reference signal.

**Third optional design: requesting the network element information of the first network element through third request information.**

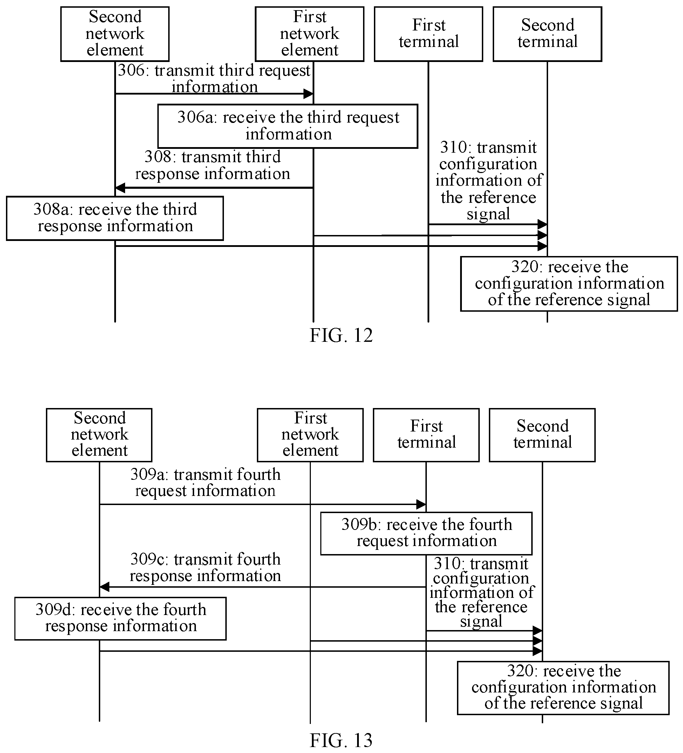

FIG. 12 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 306:** the second network element transmits third request information to the first network element.

Exemplarily, the third request information is used to request network element information of the first network element, and the network element information includes at least one of: network element identity information, a physical cell identifier (physical cell ID, PCI), a cell global identifier (global cell ID, GCI), or geographic location information. Furthermore, the network element information is information of the first network element that is required for measuring the reference signal in a manner of TDOA.

In an implementation, the second network element is an LMF, and the first network element is a gNB.

In an implementation, the second network element transmits NRPPa (NR positioning protocol annex) signaling to the first network element, and the NRPPa signaling carries the third request information. The NRPPa signaling belongs to an NRPPa transmission and receiving point (TRP) information exchange process.

**Step 306a:** the first network element receives the third request information transmitted from the second network element.

Corresponding to the second network element transmitting the third request information to the first network element, the first network element receives the third request information transmitted from the second network element.

**Step 308:** the first network element transmits third response information to the second network element.

Exemplarily, the third response information carries the network element information of the first network element.

In an implementation, the first network element transmits NRPPa signaling to the second network element, and the NRPPa signaling carries the third response information, and the NRPPa signaling belongs to an NRPPa information exchange process.

In an implementation, the first network element determines whether the first network element itself is able to be a sensing node (that is, whether to participate in the measurement on the reference signal) according to the third request information transmitted from the second network element; if it is determined that the first element network is able to be the sensing node participating in the measurement on the reference signal, the first element network transmits the third response information to the second network element, and the first response information is further used to indicate that the first network element participates in the measurement on the reference signal.

**Step 308a:** the second network element receives the third response information transmitted from the first network element.

Corresponding to the first network element transmitting the third response information to the second network element, the second network element receives the third response information transmitted from the first network element.

**Step 310:** the first network element, the second network element or the first terminal transmits configuration information of the reference signal to the second terminal.

Exemplarily, the second terminal performs measurement on the reference signal based on the configuration information of the reference signal. Optionally, the configuration information includes first configuration and second configuration, the first configuration is used to indicate a time-frequency resource for the first terminal transmitting the reference signal, and the second configuration is used to indicate configuration for the second terminal performing the measurement on the reference signal.

**Step 320:** the second terminal receives the configuration information of the reference signal.

Accordingly, the second terminal receives the first configuration and the second configuration that are transmitted from the first network element, the second network element or the first terminal.

It shall be noted that the step 306a, step 308, and step 310 in the embodiment may be implemented together as an embodiment of the first network element, and the step 306, step 308a, and step 310 in the embodiment may be implemented together as an embodiment of the second network element.

To sum up, in the method provided in the embodiment, the network element information of the first network element is obtained based on the third request information, and the first network element determines whether to perform the measurement on the reference signal based on the third request information and reports the result that the first network element performs the measurement on the reference signal to the second network element, thereby avoiding the situation where the reference signal cannot be measured, and improving the performance of measuring the reference signal.

**Fourth optional design: request the positioning capability information of the first terminal through fourth request information.**

FIG. 13 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 309a:** the second network element transmits fourth request information to the first terminal.

Exemplarily, the fourth request information is used to request the positioning capability information of the first terminal. In an implementation, the second network element is an LMF.

In an implementation, the second network element transmits LPP signaling or SLPP signaling to the first terminal, and the fourth request information carried in the LPP signaling or SLPP signaling is capability transfer information.

**Step 309b:** the first terminal receives the fourth request information transmitted from the second network element.

Corresponding to the second network element transmitting the fourth request information to the first terminal, the first terminal receives the fourth request information transmitted from the second network element.

**Step 309c:** the first terminal transmits fourth response information to the second network element.

Exemplarily, the fourth response information carries the positioning capability information of the first terminal.

In an implementation, the first terminal transmits LPP signaling or SLPP signaling to the second network element, and the fourth response information carried in the LPP signaling or SLPP signaling is the capability transfer information.

**Step 309d:** the second network element receives the fourth response information transmitted from the first terminal.

Corresponding to the first terminal transmitting the fourth response information to the second network element, the second network element receives the fourth response information transmitted from the first terminal. Exemplarily, the second network element determines a measurement manner of the reference signal according to the positioning capability information of the first terminal.

**Step 310:** the first network element, the second network element or the first terminal transmits configuration information of the reference signal to the second terminal.

Exemplarily, the second terminal performs measurement on the reference signal based on the configuration information of the reference signal. Optionally, the configuration information includes first configuration and second configuration, the first configuration is used to indicate a time-frequency resource for the first terminal transmitting the reference signal, and the second configuration is used to indicate configuration for the second terminal performing the measurement on the reference signal.

**Step 320:** the second terminal receives the configuration information of the reference signal.

Accordingly, the second terminal receives the first configuration and the second configuration that are transmitted from the first network element, the second network element or the first terminal.

It shall be noted that the step 309b, step 309c, and step 310 in the embodiment may be implemented together as an embodiment of the first terminal, and the step 309a, step 309d, and step 310 in the embodiment may be implemented together as an embodiment of the second network element.

To sum up, in the method provided in the embodiment, the positioning capability information of the first terminal is obtained based on the fourth request information, and the second network element determines the measurement manner of the reference signal according to the positioning capability information of the first terminal, thereby avoiding the situation where the reference signal cannot be measured, and improving the performance of measuring the reference signal.

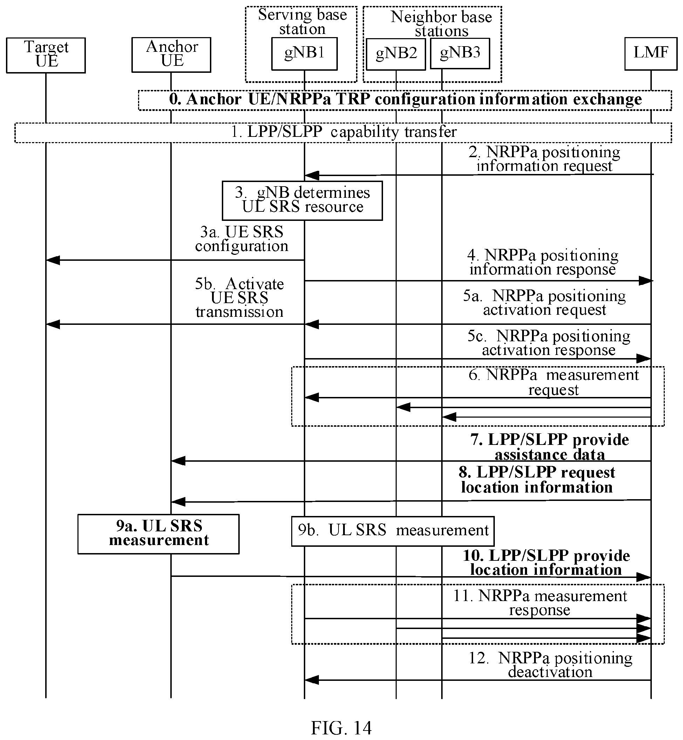

FIG. 14 provides a flowchart of a configuration method of a reference signal provided in an embodiment of the present disclosure, and the method is performed by a first terminal, a second terminal, and network devices. The network device in the method may be a device in an access network or a core network, and the network devices include a first network element and a second network element. The method includes the following.

Exemplarily, the first terminal includes a target UE, and the second terminal includes an anchor UE. The first network element includes a gNB1 in a serving base station, and a gNB2 and a gNB3 in neighbor base stations. The second network element includes an LMF.

**0.** The LMF obtains, based on an NRPPa TRP information exchange process, TRP information (e.g., at least one of: a TPR ID, a PCI, a GCI, or geographic location information) required by UL-TDOA positioning. The LMF obtains, based on a similar process, anchor UE information (e.g., at least one of: a UE ID or geographic location information) required by the UL-TDOA positioning.

**1.** The LMF may request positioning capability information of the target UE through an LPP capability transfer process. Optionally, the LMF may request positioning capability information of the anchor UE through the LPP or SLPP capability transfer process.

**2.** The LMF transmits an NRPPa positioning information request message to the serving base station, to request UL-SRS configuration information of the target UE.

**3.** The serving base station gNB1 determines a resource used by the UL-SRS and configures a UL-SRS resource set for the target UE, where the UL-SRS resource set is used to indicate the UL-SRS configuration information transmitted from the target UE.

**3a.** The UL-SRS configuration information includes at least one of: the number of consecutive OFDM symbols occupied by a reference signal resource, a time-domain starting position, a frequency-domain starting position, or a transmission period.

**4.** The serving base station gNB1 provides UL information to the LMF in an NRPPa positioning information response message, where the UL information includes the UL-SRS configuration information of the target UE.

**5.** In case of a semi-persistent SRS or an aperiodic SRS, the LMF requests the serving base station gNB1 to activate UL-SRS transmission of the target UE by transmitting an NRPPa positioning activation request to the serving base station gNB1. The serving base station gNB1 activates the UL-SRS transmission of the target UE and transmits an NRPPa positioning activation response message. The target UE initiates the UL-SRS transmission according to a time-domain resource of UL-SRS resource configuration.

**6.** The LMF provides a selected gNB with the UL-SRS configuration information of the target UE in an NRPPa measurement request message that contains all information required for the gNBs/TRPs to perform UL measurement.

**7.** The LMF transmits LPP or SLPP provide assistance data information to the anchor UE. The information includes information required for the anchor UE to perform measurement on the UL-SRS transmitted from the target UE, containing the UL-SRS configuration information of the target UE, and measurement gap configuration information. The measurement gap is used for the anchor UE to perform the measurement on a UL-SRS reference signal transmitted from the target UE within the measurement gap.

Exemplarily, the UL-SRS configuration information is called the first configuration, and the measurement gap configuration information is called the second configuration. The first configuration and/or the second configuration is carried in the provide assistance data.

Exemplarily, within the measurement gap, the anchor UE does not process a downlink channel of the anchor UE and downlink signal(s), and the anchor UE may perform an intra-frequency measurement, inter-frequency measurement or inter-system measurement during a time window within the configured measurement gap, so as to perform the measurement on the UL-SRS reference signal transmitted from the target UE.

Exemplarily, the measurement gap configuration includes at least one of: a length of the measurement gap, a repetition period of the measurement gap, a timing advance of the measurement gap, or a time-domain offset of the measurement gap. Exemplarily, there are one or more UL-SRS reference signals within the time window described with reference to the measurement gap configuration.

**8.** The LMF transmits LPP or SLPP request location information to the anchor UE for requesting performing UL-TDOA measurement.

**9a.** The anchor UE performs the measurement on the UL-SRS reference signal transmitted from the target UE within the measurement gap and obtains an UL-TDOA measurement result.

**9b.** Each gNB performs the measurement on the UL-SRS reference signal transmitted from the target UE and obtains a UL-TDOA measurement result. Exemplarily, the measurement result includes but is not limited to at least one of: UL-RTOA or UL-SRS-RSRP.

**10.** The anchor UE reports the UL-SRS measurement result of UL-TDOA to the LMF through LPP provide location information or SLPP provide location information.

**11.** Each gNB reports the UL-SRS measurement result of UL-TDOA to the LMF through an NRPPa measurement response message.

**12.** The LMF transmits an NRPPa positioning deactivation message to the serving base station gNB1.

Optionally, the LMF performs UL-TDOA positioning solution based on the UL-TDOA measurement results generated by the gNB and anchor UE, to obtain the target UE location.

To sum up, in the method provided in the embodiment, by means of the first configuration and the second configuration, the time-frequency resource for the first terminal transmitting the reference signal and the configuration for the second terminal performing the measurement on the reference signal are respectively indicated. The first configuration is used for the second terminal to determine the time-frequency resource of the reference signal, so as to help the second terminal perform the measurement on the reference signal; and the second configuration is used to indicate a manner used by the second terminal for measuring the reference signal, thereby avoiding the situation where the reference signal cannot be measured, and improving the performance of measuring the reference signal.

**Hereinafter, an activation indication, a deactivation indication and measurement reporting configuration are introduced.** It shall be understood that the two embodiments described below may be applied to a case where the first link is an uplink, or may be applied to a case where the first link is a sidelink.

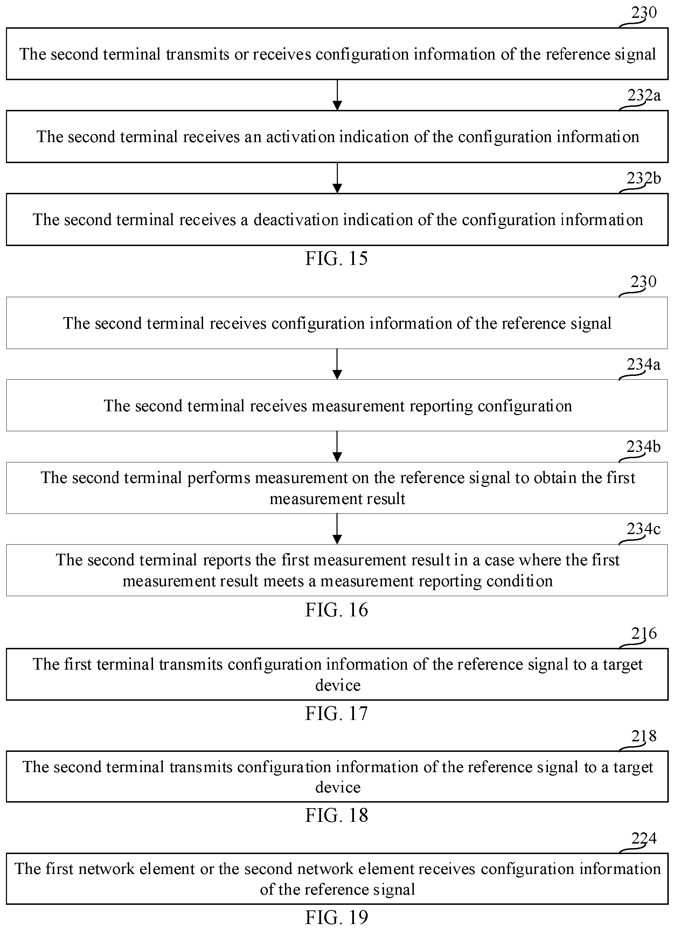

FIG. 15 provides a flowchart of a configuration method of a reference signal provided in an embodiment of the present disclosure. The method is performed by a second terminal, and the method includes the following.

**Step 230:** the second terminal transmits or receives configuration information of the reference signal.

Exemplarily, the configuration information is information related to the reference signal. The reference signal is transmitted via a first link, and the first link is an uplink or a sidelink. In a case where the second terminal transmits the configuration information of the reference signal, a receiver of the configuration information is a device outside the first link. In a case where the second terminal receives the configuration information of the reference signal, the receiver of the configuration information is the second terminal, and the second terminal is a device outside the first link.

**Step 232a:** the second terminal receives an activation indication of the configuration information.

Exemplarily, the activation indication is used to activate the configuration information of the reference signal. Optionally, the configuration information activated by the activation indication is at least one of multiple pieces of configuration information of the reference information. Exemplarily, the second terminal performs the measurement on the reference signal after receiving the activation indication. In an implementation, the second terminal performs the measurement on the reference signal in an aperiodic manner or a semi-persistent manner. Furthermore, the activation indication is transmitted via being carried in at least one of following signaling: medium access control control element (MAC CE), downlink control information (DCI), or sidelink control information (SCI).

The activation indication in the embodiment is transmitted to the second terminal from, but not limited to, at least one of: the first terminal, the first network element or the second network element. Accordingly, in a case where the first terminal transmits the activation indication of the configuration information to the second terminal, the activation indication is used to activate the configuration information of the reference signal; and in a case where the first network element or the second network element transmits the activation indication of the configuration information to the second terminal, the activation indication is used to activate the configuration information of the reference signal.

**Step 232b:** the second terminal receives a deactivation indication of the configuration information.

Exemplarily, the deactivation indication is used to deactivate the configuration information of the reference signal. Optionally, the configuration information deactivated by the deactivation indication is at least one of multiple pieces of configuration information of the reference information. Exemplarily, the second terminal stops performing the measurement on the reference signal after receiving the deactivation indication. Similarly, the deactivation indication is transmitted via being carried in at least one of the following signaling: MAC CE, DCI, or SCI.

The activation indication in the embodiment is transmitted to the second terminal from, but not limited to, at least one of: the first terminal, the first network element or the second network element. Accordingly, in a case where the first terminal transmits the deactivation indication of the configuration information to the second terminal, the deactivation indication is used to deactivate the configuration information of the reference signal; and in a case where the first network element or the second network element transmits the deactivation indication of the configuration information to the second terminal, the deactivation indication is used to deactivate the configuration information of the reference signal. It shall be understood that the transmission of the activation indication and/or the deactivation indication is usually performed by the first terminal after the transmission of the configuration information of the reference signal, and the transmission of the activation indication and/or the deactivation indication is usually performed by the first network element or the second network element after the transmission or reception of the configuration information of the reference signal.

It shall be noted that the step 232a and the step 232b in the embodiment may be freely combined with the step 230 respectively, to form new embodiments. The embodiment shows a typical embodiment only, which includes the above three steps. A new embodiment may also be obtained by combining the step 230 and the step 232a, and a new embodiment may also be obtained by combining the step 230 and the step 232b.

To sum up, in the method provided in the embodiment, the configuration information of the reference signal is activated and/or deactivated through the activation indication and/or the deactivation indication, which enables the second terminal to perform the measurement on the reference signal in the aperiodic or semi-persistent manner, thereby improving the performance of measuring the reference signal.

FIG. 16 provides a flowchart of a configuration method of a reference signal provided in an embodiment of the present disclosure. The method is performed by a second terminal, and the method includes the following.

**Step 230:** the second terminal transmits or receives configuration information of the reference signal.

Exemplarily, the configuration information is information related to the reference signal, the reference signal is transmitted via a first link, and the first link is an uplink or a sidelink.

In a case where the second terminal transmits the configuration information of the reference signal, a receiver of the configuration information is a device outside the first link. In a case where the second terminal receives the configuration information of the reference signal, the receiver of the configuration information is the second terminal, and the second terminal is a device outside the first link.

**Step 234a:** the second terminal receives measurement reporting configuration.

Exemplarily, the measurement reporting configuration is used to indicate that the second terminal reports a first measurement result in a case where the first measurement result meets a measurement reporting condition. For example, the measurement reporting condition includes that a RSRP threshold is exceeded. That is, the first measurement result is reported in a case where the first measurement result exceeds the RSRP threshold. Exemplarily, the second terminal reports the first measurement result to the first network element or the second network element.

Exemplarily, the measurement reporting configuration is transmitted to the second terminal from, but not limited to, at least one of: the first terminal, the first network element, or the second network element. Accordingly, the first terminal, the first network element or the second network element transmits the measurement reporting configuration to the second terminal.

In an implementation, the measurement reporting configuration received by the second terminal belongs to configuration information of a reference signal. For example, the measurement reporting configuration is called third configuration, and the configuration information of the reference signal includes the third configuration. Furthermore, the configuration information of the reference signal received by the second terminal includes the measurement reporting configuration. In other words, in the case where the first terminal, the first network element or the second network element transmits the configuration information of the reference signal to the second terminal, the configuration information of the reference signal includes the measurement reporting configuration.

**Step 234b:** the second terminal performs measurement on the reference signal to obtain the first measurement result.

Exemplarily, the reference signal is measured at the second terminal side, and the first measurement result is a measurement result of the reference signal performed by the second terminal.

**Step 234c:** the second terminal reports the first measurement result in a case where the first measurement result meets the measurement reporting condition.

Exemplarily, based on the indication of the measurement reporting configuration, the first measurement result is reported in the case where the first measurement result meets the measurement reporting condition. Optionally, in a case where the first measurement result does not meet the measurement reporting condition, the second terminal does not report the first measurement result; and/or in the case where the first measurement result does not meet the measurement reporting condition, the second terminal reports indication information.

Exemplarily, the indication information indicates that the first measurement result does not meet the measurement reporting condition. Accordingly, the measurement reporting configuration is further used to indicate that in the case where the first measurement result does not meet the measurement reporting condition, the second terminal does not report the first measurement result, and/or the second terminal reports the indication information.

It shall be understood that, in the embodiment, there is no limitation on the execution order of the step 230 and a first branch. The step 230 may be performed before, after or simultaneously with the first branch. The first branch includes the step 234a, the step 234b, and the step 234c.

To sum up, in the method provided in the embodiment, the second terminal is indicated to report the first measurement result based on the measurement reporting configuration, thereby ensuring the measurement performance of the first measurement result received by the first network element or the second network element, and improving the performance of measuring the reference signal in the collaborative sensing scenario or the hybrid positioning scenario.

**For the case where the first link is the sidelink:**
The target device includes a first network element or a second network element, and a device transmitting configuration information to the target device includes a first terminal or a second terminal. The above terminals and network devices are introduced respectively.

FIG. 17 provides a flowchart of a configuration method of a reference signal provided in an embodiment of the present disclosure. The method is performed by a first terminal, and the method includes the following.

**Step 216:** the first terminal transmits configuration information of the reference signal to a target device.

Exemplarily, the embodiment is performed by the first terminal, and the target device in the embodiment is a first network element or a second network element. That is, the first terminal transmits the configuration information of the reference signal to the first network element or the second network element.

Exemplarily, the reference signal is transmitted via the first link (for example, the first link is the sidelink); the target device is a device outside the first link, and the reference signal is transmitted from the first terminal to the second terminal.

Exemplarily, the configuration information includes resource configuration of the reference signal. In other words, the first terminal transmits the resource configuration of the reference signal.

Accordingly, the first network element or the second network element receives the resource configuration of the reference signal. The reference signal is transmitted via being carried in a sidelink resource.

Exemplarily, the first network element is an access network device, e.g., a gNB. The second network element is a core network device, e.g., any one of an LMF, an AMF and an SF. In an optional implementation, in a case where the first terminal is a vehicle-mounted terminal, the second terminal is implemented as a road side unit (RSU). Exemplarily, the resource configuration of the reference signal is used to indicate a time-frequency resource for the first terminal transmitting the reference signal. The time-frequency resource of the reference signal is a time-frequency resource autonomously selected by the first terminal from a network-configured resource pool or a pre-configured resource pool. The reference signal is transmitted to the second terminal on the SL, and meanwhile the signal needs to be received by the network device. The resource configuration is transmitted to the network device, where the resource configuration is used for the network device to determine the time-frequency resource of the reference signal, so as to help the network device perform measurement on the reference signal.

To sum up, in the method provided in the embodiment, through transmitting the configuration information of the reference signal to the first network element or the second network element, the first network element or the second network element outside the sidelink where the reference signal is located determines the configuration information of the reference signal, so as to help the first network element or the second network element perform the measurement on the reference signal, thereby avoiding the situation where the first network element or the second network element is unable to measure the reference signal, and improving the performance of measuring the reference signal in the collaborative sensing scenario or the hybrid positioning scenario.

FIG. 18 provides a flowchart of a configuration method of a reference signal provided in an embodiment of the present disclosure. The method is performed by a second terminal, and the method includes the following.

**Step 218:** the second terminal transmits configuration information of the reference signal to a target device.

Exemplarily, the embodiment is performed by the second terminal, and the target device in the embodiment is a first network element or a second network element. That is, the second terminal transmits the configuration information of the reference signal to the first network element or the second network element.

Exemplarily, the reference signal is transmitted via the first link (for example, the first link is the sidelink); the target device is a device outside the first link, and the reference signal is transmitted from the first terminal to the second terminal.

To sum up, in the method provided in the embodiment, through transmitting the configuration information of the reference signal to the first network element or the second network element, the first network element or the second network element outside the sidelink where the reference signal is located determines the configuration information of the reference signal, so as to help the first network element or the second network element perform the measurement on the reference signal, thereby avoiding the situation where the first network element or the second network element is unable to measure the reference signal, and improving the performance of measuring the reference signal in the collaborative sensing scenario or the hybrid positioning scenario.

FIG. 19 provides a flowchart of a configuration method of a reference signal provided in an embodiment of the present disclosure, and the method is performed by a network device. The network device in the method may be a device in an access network or a core network. Network devices include a first network element and a second network element. The method includes the following.

**Step 224:** the first network element or the second network element receives configuration information of the reference signal.

Exemplarily, the embodiment is performed by the first network element or the second network element; the first network element includes a gNB, and the second network element includes any one of an LMF, an AMF and an SF. The target device in the embodiment is the first network element or the second network element. That is, the first network element or the second network element receives the configuration information of the reference signal. A transmitter of the configuration information is the first terminal or the second terminal.

Exemplarily, the reference signal is transmitted via the first link (for example, the first link is a sidelink); the target device is a device outside the first link, and the reference signal is transmitted from the first terminal to the second terminal.

Exemplarily, the configuration information includes resource configuration of the reference signal. In other words, the first network element or the second network element receives the resource configuration of the reference signal. Exemplarily, the resource configuration of the reference signal is used to indicate a time-frequency resource for the first terminal transmitting the reference signal. The time-frequency resource of the reference signal is a time-frequency resource autonomously selected by the first terminal from a network-configured resource pool or a pre-configured resource pool. The reference signal is transmitted to the second terminal on the SL, and meanwhile the signal needs to be received by the network device.

In an optional design, the method further includes:
performing, by the first network element or the second network element, measurement on the reference signal based on the resource configuration of the reference signal to obtain a second measurement result.

Furthermore, the second measurement result includes at least one of following information of the reference signal:
a reference signal received power, a delay, a Doppler shift, channel information, a distance, a speed, an orientation, or acceleration.

To sum up, in the method provided in the embodiment, through receiving the configuration information of the reference signal by the first network element or the second network element, the first network element or the second network element outside the sidelink where the reference signal is located determines the configuration information of the reference signal, which helps the first network element or the second network element perform the measurement on the reference signal, thereby avoiding the situation where the first network element or the second network element is unable to measure the reference signal, and improving the performance of measuring the reference signal in the collaborative sensing scenario or the hybrid positioning scenario.

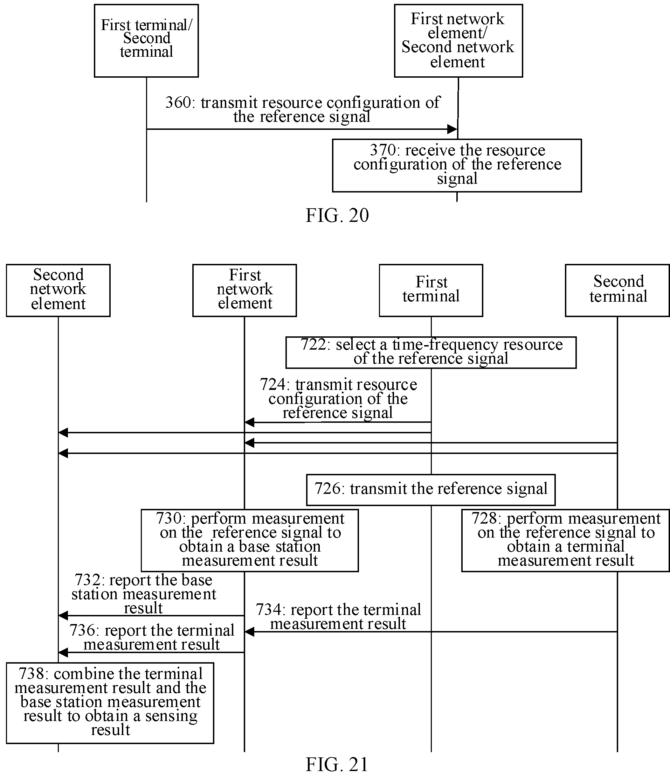

FIG. 20 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 360:** the first terminal or the second terminal transmits resource configuration of the reference signal.

Accordingly, the first network element or the second network element receives the resource configuration of the reference signal. The reference signal is transmitted via being carried in a sidelink resource.

Exemplarily, the first network element is an access network device, e.g., a gNB. The second network element is a core network device, e.g., any one of an LMF, an AMF and an SF. In an optional implementation, in a case where the first terminal is a vehicle-mounted terminal, the second terminal is implemented as a road side unit (RSU).

Exemplarily, the resource configuration of the reference signal is used to indicate a time-frequency resource for the first terminal transmitting the reference signal. The time-frequency resource of the reference signal is a time-frequency resource autonomously selected by the first terminal from a network-configured resource pool or a pre-configured resource pool. The reference signal is transmitted to the second terminal on the SL, and meanwhile the signal needs to be received by the network device. The resource configuration is transmitted to the network device, where the resource configuration is used for the network device to determine the time-frequency resource of the reference signal, so as to help the network device perform the measurement on the reference signal.

**Step 370:** the first network element or the second network element receives the resource configuration of the reference signal.

Exemplarily, the resource configuration of the reference signal is used to indicate the time-frequency resource for the first terminal transmitting the reference signal.

To sum up, in the method provided in the embodiment, based on the resource configuration of the reference signal, the first terminal is indicated to transmit the time-frequency resource of the reference signal, and the resource configuration is used for the network device to determine the time-frequency resource of the reference signal, which helps the network device perform the measurement on the reference signal, thereby avoiding the situation where the reference signal cannot be measured, and improving the performance of measuring the reference signal.

FIG. 21 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 722:** the first terminal selects a time-frequency resource of the reference signal.

Exemplarily, based on resource monitoring or a random selection, the first terminal autonomously selects the time-frequency resource used for transmitting the reference signal on the SL from a network-configured resource pool or a pre-configured resource pool. Exemplarily, the first network element includes a gNB, and the second network element includes any one of an LMF, an AMF, and an SF.

**Step 724:** the first terminal or the second terminal transmits resource configuration of the reference signal to the network device.

Exemplarily, the first terminal or the second terminal transmits the resource configuration of the reference signal; and accordingly, the first network element or the second network element receives the resource configuration of the reference signal. It shall be noted that, in the case where the second terminal transmits the resource configuration to the first network element or the second network element, the resource configuration is usually first transmitted from the first terminal to the second terminal, and then transmitted from the second terminal to the first network element or the second network element.

**Step 726:** the first terminal transmits the reference signal.

Exemplarily, the first terminal transmits the reference signal on the time-frequency resource indicated by the first configuration.

**Step 728:** the second terminal performs measurement on the reference signal to obtain a terminal measurement result.

Exemplarily, the second terminal performs the measurement on the reference signal within a measurement gap based on the received first configuration and second configuration, to obtain the terminal measurement result. Exemplarily, the terminal measurement result includes but is not limited to at least one of following information of the reference signal: a RSRP, a delay, a Doppler shift, channel information, a distance, a speed, an orientation, or acceleration.

**Step 730:** the first network element performs measurement on the reference signal to obtain a base station measurement result.

Exemplarily, the first network element performs the measurement on the reference signal to obtain the base station measurement result. It shall be understood that the measurement on the reference signal by the first network element and the second terminal are independent of each other, and the terminal measurement result and the base station measurement result may be the same or different.

**Step 732:** the first network element reports the base station measurement result to the second network element.

Exemplarily, the gNB reports the base station measurement result to the AMF/SF/LMF.

**Step 734:** the second terminal reports the terminal measurement result to the first network element.

Exemplarily, the second terminal reports the terminal measurement result to the gNB.

**Step 736:** the first network element reports the terminal measurement result to the second network element.

Exemplarily, the gNB reports the received terminal measurement result to the AMF/SF/LMF. In other words, the second terminal reports the terminal measurement result to AMF/SF/LMF through the gNB.

**Step 738:** the second network element combines the terminal measurement result and the base station measurement result to obtain a sensing result.

Exemplarily, the AMF/SF/LMF combines the terminal measurement result and base station measurement result generated by the second terminal and gNB respectively, to obtain the sensing result, thereby achieving collaborative sensing.

To sum up, in the method provided in the embodiment, based on the resource configuration of the reference signal, the first terminal is indicated to transmit the time-frequency resource of the reference signal, and the resource configuration is used for the network device to determine the time-frequency resource of the reference signal, which helps the network device perform the measurement on the reference signal, thereby avoiding the situation where the reference signal cannot be measured, and improving the performance of measuring the reference signal.

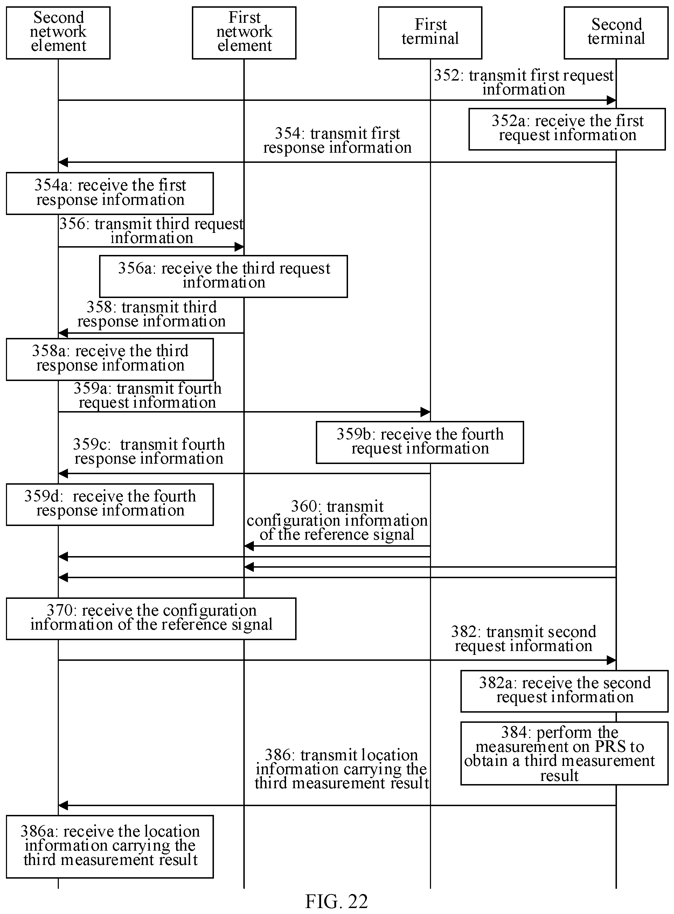

FIG. 22 provides a flowchart of a configuration method of a reference signal provided in an embodiment of the present disclosure, and the method is performed by a first terminal, a second terminal, and a network device. The network device in the method may be a device in an access network or a core network. Network devices include a first network element and a second network element. The method includes the following.

**Step 352:** the second network element transmits first request information to the second terminal.

Exemplarily, the first request information is used to request terminal information of the second terminal, and the terminal information includes identity information of the second terminal and/or geographic location information of the second terminal. Furthermore, the terminal information is information of the second terminal that is required for measuring the reference signal in a manner of TDOA.

In an implementation, the second network element is an LMF, and the second terminal is an anchor terminal.

In an implementation, the second network element transmits LPP signaling or SLPP signaling to the second terminal, and the LPP signaling or SLPP signaling carries the first request information; and the LPP signaling or SLPP signaling belongs to an LPP anchor UE information exchange process or an SLPP anchor UE information exchange process.

**Step 352a:** the second terminal receives the first request information transmitted from the second network element.

Corresponding to the second network element transmitting the first request information to the second terminal, the second terminal receives the first request information transmitted from the second network element.

**Step 354:** the second terminal transmits first response information to the second network element.

Exemplarily, the first response information carries the terminal information of the second terminal, and the terminal information includes identity information of the second terminal and/or geographic location information of the second terminal. In an implementation, the second network element transmits LPP signaling or SLPP signaling to the second terminal, and the LPP signaling or SLPP signaling carries the first response information; and the LPP signaling or SLPP signaling belongs to an LPP anchor UE information exchange process or an SLPP anchor UE information exchange process.

**Step 354a:** the second network element receives the first response information transmitted from the second terminal.

Corresponding to the second terminal transmitting the first response information to the second network element, the second network element receives the first response information transmitted from the second terminal.

**Step 356:** the second network element transmits third request information to the first network element.

Exemplarily, the third request information is used to request network element information of the first network element, and the network element information includes at least one of: network element identity information, a PCI, a GCI, or geographic location information. Furthermore, the network element information is information of the first network element that is required for measuring the reference signal in a manner of TDOA.

In an implementation, the second network element is an LMF, and the first network element is a gNB.

In an implementation, the second network element transmits NRPPa signaling to the first network element, and the NRPPa signaling carries the third request information, and the NRPPa signaling belongs to an NRPPa transmission and receiving point information exchange process.

**Step 356a:** the first network element receives the third request information transmitted from the second network element.

Corresponding to the second network element transmitting the third request information to the first network element, the first network element receives the third request information transmitted from the second network element.

**Step 358:** the first network element transmits third response information to the second network element.

Exemplarily, the third response information carries the network element information of the first network element. In an implementation, the first network element transmits NRPPa signaling to the second network element, and the NRPPa signaling carries the third response information, and the NRPPa signaling belongs to the NRPPa information exchange process.

**Step 358a:** the second network element receives the third response information transmitted from the first network element.

Corresponding to the first network element transmitting the third response information to the second network element, the second network element receives the third response information transmitted from the first network element.

**Step 359a:** the second network element transmits fourth request information to the first terminal.

Exemplarily, the fourth request information is used to request positioning capability information of the first terminal. In an implementation, the second network element is an LMF.

In an implementation, the second network element transmits LPP signaling or SLPP signaling to the first terminal, and the fourth request information carried in the LPP signaling or SLPP signaling is capability transfer information.

**Step 359b:** the first terminal receives the fourth request information transmitted from the second network element.

Corresponding to the second network element transmitting the fourth request information to the first terminal, the first terminal receives the fourth request information transmitted from the second network element.

**Step 359c:** the first terminal transmits the fourth response information to the second network element.

Exemplarily, the fourth response information carries the positioning capability information of the first terminal. In an implementation, the first terminal transmits LPP signaling or SLPP signaling to the second network element, and the fourth response information carried in the LPP signaling or SLPP signaling is capability transfer information.

**Step 359d:** the second network element receives the fourth response information transmitted from the first terminal.

Corresponding to the first terminal transmitting the fourth response information to the second network element, the second network element receives the fourth response information transmitted from the first terminal.

**Step 360:** the first terminal or the second terminal transmits configuration information of the reference signal.

Exemplarily, the first network element or the second network element performs measurement on the reference signal based on the configuration information of the reference signal. Optionally, the configuration information includes resource configuration of the reference signal. Exemplarily, the resource configuration of the reference signal is used to indicate a time-frequency resource for the first terminal transmitting the reference signal. In an optional design, the first terminal transmits the resource configuration of the reference signal to the first network element or the second network element on the uplink through a Uu interface.

In an optional design, the first terminal transmits the resource configuration of the reference signal to the second terminal on the sidelink through a PC5 interface.

**Step 370:** the first network element or the second network element receives the configuration information of the reference signal.

Exemplarily, the first network element or the second network element performs the measurement on the reference signal based on the configuration information of the reference signal. Optionally, the configuration information includes the resource configuration of the reference signal.

Corresponding to the first terminal or the second terminal transmitting the resource configuration of the reference signal, the first network element or the second network element receives the resource configuration of the reference signal.

**Step 382:** the second network element transmits second request information to the second terminal.

In the embodiment, the reference signal includes a positioning reference signal (PRS). Exemplarily, the second request information is used to request the second terminal to perform the measurement on the PRS in a manner of time difference of arrival (TDOA).

In an implementation, the second network element is an LMF, and the second terminal is an anchor terminal. In an implementation, the second network element transmits LPP signaling to the second terminal, and the first request information carried in the LPP signaling or the SLPP signaling is request location information.

**Step 382a:** the second terminal receives the second request information transmitted from the second network element.

Corresponding to the second network element transmitting the second request information to the second terminal, the second terminal receives the second request information transmitted from the second network element.

**Step 384:** the second terminal performs the measurement on the SRS based on the first configuration and the second configuration, to obtain a first measurement result.

The second terminal performs the measurement on the PRS transmitted from the first terminal within a measurement gap; and the first measurement result obtained is a TDOA measurement result of the uplink.

The first measurement result includes but is not limited to at least one of the following: UL RTOA, or UL-SRS-RSRP.

**Step 386:** the second terminal transmits location information carrying the first measurement result to the second network element.

In an implementation, the second terminal transmits LPP signaling or SLPP signaling to the second network element, and the location information carried in the LPP signaling or SLPP signaling is provide location information, and the provide location information indicates the first measurement result.

**Step 386a:** the second network element receives the location information carrying the first measurement result transmitted from the second terminal.

Corresponding to the second terminal transmitting the location information carrying the first measurement result to the second network element, the second network element receives the location information carrying the first measurement result transmitted from the second terminal.

To sum up, in the method provided in the embodiment, based on the resource configuration of the reference signal, the first terminal is indicated to transmit the time-frequency resource of the reference signal, and the resource configuration is used for the network device to determine the time-frequency resource of the reference signal, which helps the network device perform the measurement on the reference signal, thereby avoiding the situation where the reference signal cannot be measured, and improving the performance of measuring the reference signal.

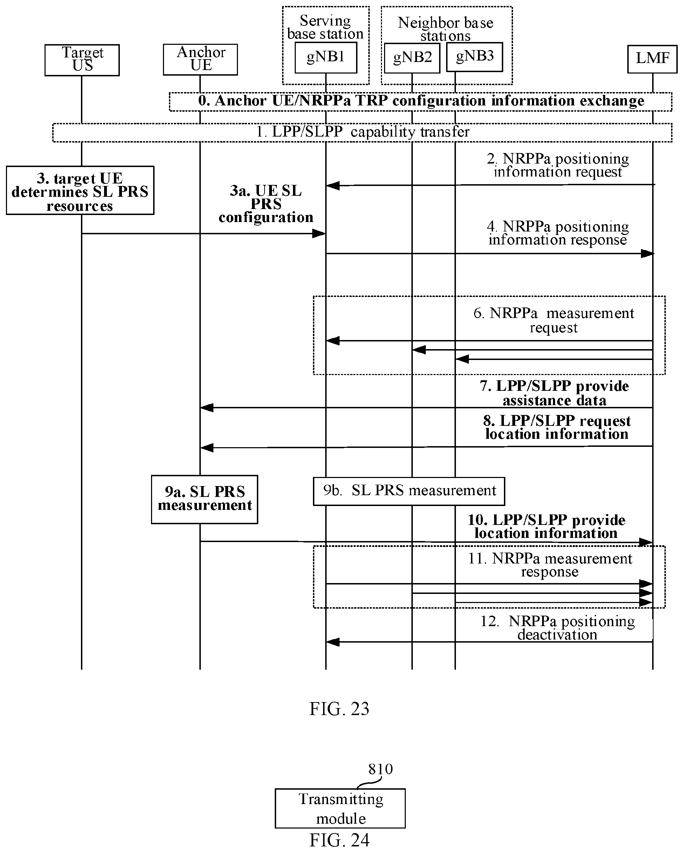

FIG. 23 provides a flowchart of a configuration method of a reference signal provided in an embodiment of the present disclosure, and the method is performed by a first terminal, a second terminal and a network device. The network device in the method may be a device in an access network or a core network. Network devices include a first network element and a second network element. The method includes the following.

Exemplarily, the first terminal includes a target UE, and the second terminal includes an anchor UE. The first network element includes a gNB1 in a serving base station, and a gNB2 and a gNB3 in neighboring base stations. The second network element includes an LMF.

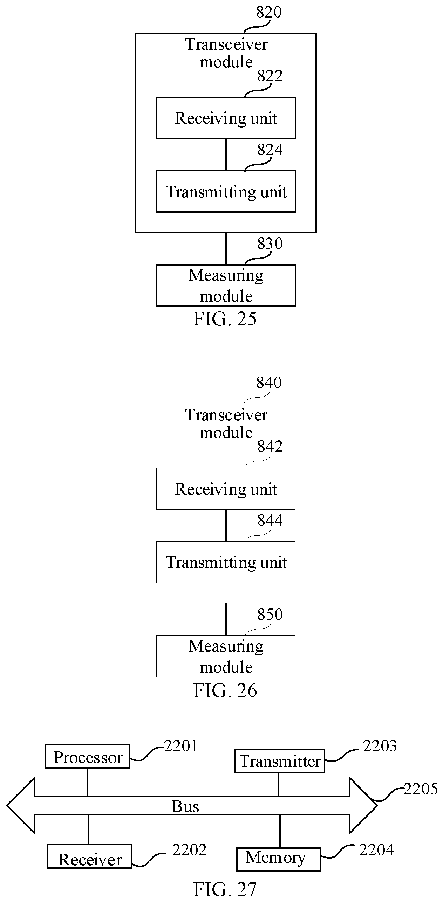

It shall be noted that only some steps are introduced in the embodiment, and for other steps, reference can be made to the above embodiment corresponding to FIG. 25, which will not be repeated in this embodiment.

**3.** Based on resource monitoring or random selection, the target UE autonomously selects a time-frequency resource used for transmitting an SL-PRS reference signal from a network-configured resource pool or a pre-configured resource pool.

**3a.** The target UE or the anchor UE transmits SL-PRS resource configuration of the target UE to the network device (gNB or LMF), where the resource configuration is used to indicate the time-frequency resource for the target UE transmitting the SL-PRS reference signal. The target UE transmits the SL-PRS reference signal to the anchor UE on the selected time-frequency resource. Exemplarily, the resource configuration is carried via an RRC message and transmitted to the gNB. Alternatively, the resource configuration is carried via an LPP message or an SLPP message and transmitted to the LMF.

**9a.** The anchor UE receives and measures the SL-PRS reference signal transmitted from the target UE to obtain a UL-TDOA measurement result.

**9b.** Each gNB receives and measures the SL-PRS reference signal transmitted from the target UE based on SL-PRS reference signal resource information reported by the target UE to obtain a UL-TDOA measurement result. Exemplarily, the measurement result includes but is not limited to at least one of: UL-RTOA or UL-SRS-RSRP.

To sum up, in the method provided in the embodiment, based on the resource configuration of the reference signal, the first terminal is indicated to transmit the time-frequency resource of the reference signal, and the resource configuration is used for the network device to determine the time-frequency resource of the reference signal, which helps the network device perform the measurement on the reference signal, thereby avoiding the situation where the reference signal cannot be measured, and improving the performance of measuring the reference signal.

Those skilled in the art may understand that the above embodiments may be implemented independently, or the above embodiments may be freely combined to form new embodiments, which is not limited in the present disclosure.

The following are apparatus embodiments of the present disclosure, which may be used to implement method embodiments of the present disclosure. For details not disclosed in the apparatus embodiments of the present disclosure, reference can be made to the method embodiments of the present disclosure.

FIG. 24 shows a block diagram of a configuration apparatus of a reference signal provided in an exemplary embodiment of the present disclosure, and the apparatus includes a transmitting module 810.

The transmitting module 810 is configured to transmit configuration information of the reference signal to a target device.

The reference signal is transmitted via a first link, and the target device is a device outside the first link.

In an optional design of the embodiment, the target device includes a second terminal, and the first link is an uplink.

The transmitting module 810 is further configured to transmit first configuration and second configuration to the second terminal. The first configuration is used to indicate a time-frequency resource for a first terminal transmitting the reference signal on the uplink; the second configuration is used to indicate configuration of a measurement gap, and the measurement gap is used to indicate a time window for the second terminal performing measurement on the reference signal.

In an optional design of the embodiment, the transmitting module 810 is further configured to:
transmit the first configuration and the second configuration to the second terminal on a sidelink.

In an optional design of the embodiment, the first configuration includes at least one of the following: time-domain length information of the reference signal, a time-domain starting position of the reference signal, a frequency-domain starting position of the reference signal, or a transmission period of the reference signal.

In an optional design of the embodiment, the second configuration includes at least one of the following:
a length of the measurement gap, a repetition period of the measurement gap, a timing advance of the measurement gap, or a time-domain offset of the measurement gap,
where the second terminal performs the measurement on the reference signal within the measurement gap.

In an optional design of the embodiment, the target device includes a first network element or a second network element, and the first link is a sidelink.

The transmitting module 810 is further configured to: transmit resource configuration of the reference signal to the first network element or the second network element, where the resource configuration of the reference signal is used to indicate a time-frequency resource for a first terminal transmitting the reference signal on the sidelink.

In an optional design of the embodiment, the transmitting module 810 is further configured to:
transmit the resource configuration of the reference signal to the first network element or the second network element on an uplink.

In an optional design of the embodiment, the transmitting module 810 is further configured to:
transmit an activation indication of the configuration information to a second terminal, where the activation indication is used to activate the configuration information of the reference signal; and/or
transmit a deactivation indication of the configuration information to the second terminal, where the deactivation indication is used to deactivate the configuration information of the reference signal.

In an optional design of the embodiment, the transmitting module 810 is further configured to: transmit measurement reporting configuration to a second terminal, where the measurement reporting configuration is used to indicate that the second terminal reports a first measurement result in a case where the first measurement result meets a measurement reporting condition.

The first measurement result is obtained by the second terminal by performing measurement on the reference signal.

In an optional design of the embodiment, the measurement reporting configuration is further used to indicate that in a case where the first measurement result does not meet the measurement reporting condition, the second terminal does not report the first measurement result, and/or the second terminal reports indication information

The indication information indicates that the first measurement result does not meet the measurement reporting condition.

In an optional design of the embodiment, the reference signal is used for collaborative sensing or hybrid positioning.

FIG. 25 shows a block diagram of a configuration apparatus of a reference signal provided in an exemplary embodiment of the present disclosure, and the apparatus includes a transceiver module 820.

The transceiver module 820 is configured to transmit or receive configuration information of the reference signal.

The reference signal is transmitted via a first link, and a target device receiving the configuration information is a device outside the first link.

In an optional design of the embodiment, the target device includes a second terminal, and the first link is an uplink.

The transceiver module 820 includes a receiving unit 822. The receiving unit 822 is configured to receive first configuration and second configuration. The first configuration is used to indicate a time-frequency resource for a first terminal transmitting the reference signal; the second configuration is used to indicate configuration of a measurement gap, and the measurement gap is used to indicate a time window for the second terminal performing measurement on the reference signal.

In an optional design of the embodiment, the first configuration includes at least one of the following: time-domain length information of the reference signal, a time-domain starting position of the reference signal, a frequency-domain starting position of the reference signal, or a transmission period of the reference signal.

In an optional design of the embodiment, the second configuration includes at least one of the following:
a length of the measurement gap, a repetition period of the measurement gap, a timing advance of the measurement gap, or a time-domain offset of the measurement gap,
where the second terminal performs the measurement on the reference signal within the measurement gap.

In an optional design of the embodiment, the apparatus further includes a measuring module 830.

The measuring module 830 is configured to perform the measurement on the reference signal based on the first configuration and the second configuration to obtain a first measurement result.

The transceiver module 820 includes a transmitting unit 824 configured to transmit the first measurement result to a first network element.

In an optional design of the embodiment, the first measurement result includes at least one of the following information of the reference signal:
a reference signal received power, a delay, a Doppler shift, channel information, a distance, a speed, an orientation, or acceleration.

In an optional design of the embodiment, the first configuration and the second configuration are transmitted from a second network element.

In an optional design of the embodiment, the target device includes a first network element or a second network element, and the first link is a sidelink.

The transceiver module 820 includes a transmitting unit 824. The transmitting unit 824 is configured to transmit resource configuration of the reference signal to the first network element or the second network element, and the resource configuration of the reference signal is used to indicate a time-frequency resource for a first terminal transmitting the reference signal.

In an optional design of the embodiment, the transceiver module 820 includes:
a receiving unit 822, where the receiving unit 822 is configured to receive an activation indication of the configuration information, and the activation indication is used to activate the configuration information of the reference signal; and/or
the receiving unit 822 is further configured to receive a deactivation indication of the configuration information, and the deactivation indication is used to deactivate the configuration information of the reference signal.

In an optional design of the embodiment, the transceiver module 820 includes a receiving unit 822.

The receiving unit 822 is configured to receive measurement reporting configuration, where the measurement reporting configuration is used to indicate that a second terminal reports a first measurement result in a case where the first measurement result meets a measurement reporting condition.

The apparatus further includes a measuring module 830 configured to perform the measurement on the reference signal to obtain the first measurement result.

The transceiver module 820 includes a transmitting unit 824 configured to report the first measurement result in the case where the first measurement result meets the measurement reporting condition.

In an optional design of the embodiment, the transmitting unit 824 is further configured to: in a case where the first measurement result does not meet the measurement reporting condition, not report the first measurement result; and/or in the case where the first measurement result does not meet the measurement reporting condition, report the indication information.

The indication information indicates that the first measurement result does not meet the measurement reporting condition.

In an optional design of the embodiment, the transceiver module 820 is further configured to:
receive first request information transmitted from a second network element, where the first request information is used to request terminal information of a second terminal; and
transmit first response information to the second network element, where the first response information carries the terminal information of the second terminal.

The terminal information includes identity information of the second terminal and/or geographic location information of the second terminal.

In an optional design of the embodiment, the transceiver module 820 is further configured to: receive second request information transmitted from a second network element, where the second request information is used to request a second terminal to perform measurement on the reference signal;
perform the measurement on the reference signal based on first configuration and second configuration to obtain a first measurement result; and
transmit the first measurement result to the second network element, where the first measurement result is used for collaborative sensing or hybrid positioning.

In an optional design of the embodiment, the transceiver module 820 is further configured to: transmit terminal information of the second terminal to the second network element, where the terminal information includes identity information of the second terminal and/or geographic location information of the second terminal.

FIG. 26 shows a block diagram of a configuration apparatus of a reference signal provided in an exemplary embodiment of the present disclosure, and the apparatus includes a transceiver module 840.

The transceiver module 840 is configured to transmit or receive configuration information of the reference signal.

The reference signal is transmitted via a first link, and a target device receiving the configuration information is a device outside the first link.

In an optional design of the embodiment, the target device includes a second terminal, and the first link is an uplink.

The transceiver module 840 includes a transmitting unit 844. The transmitting unit 844 is configured to transmit first configuration and second configuration to the second terminal. The first configuration is used to indicate a time-frequency resource for a first terminal transmitting the reference signal; the second configuration is used to indicate configuration of a measurement gap, and the measurement gap is used to indicate a time window for the second terminal performing measurement on the reference signal.

In an optional design of the embodiment, the first configuration includes at least one of the following: time-domain length information of the reference signal, a time-domain starting position of the reference signal, a frequency-domain starting position of the reference signal, or a transmission period of the reference signal.

In an optional design of the embodiment, the second configuration includes at least one of the following:
a length of the measurement gap, a repetition period of the measurement gap, a timing advance of the measurement gap, or a time-domain offset of the measurement gap,
where the second terminal performs the measurement on the reference signal within the measurement gap.

In an optional design of the embodiment, the transceiver module 840 includes a receiving unit 842. The receiving unit 842 is configured to receive a first measurement result, where the first measurement result is obtained by the second terminal by performing the measurement on the reference signal based on the first configuration and the second configuration.

The transmitting unit 844 is further configured to report the first measurement result to a second network element.

In an optional design of the embodiment, the first measurement result includes at least one of following information of the reference signal:
a reference signal received power, a delay, a Doppler shift, channel information, a distance, a speed, an orientation, or acceleration.

In an optional design of the embodiment, the target device includes the first network element or the second network element, and the first link is a sidelink.

The transceiver module 840 includes a receiving unit 842. The receiving unit 842 is configured to receive resource configuration of the reference signal, where the resource configuration of the reference signal is used to indicate a time-frequency resource for a first terminal transmitting the reference signal.

In an optional design of the embodiment, the apparatus further includes a measuring module 850.

The measuring module 850 is configured to perform the measurement on the reference signal based on the resource configuration of the reference signal to obtain a second measurement result.

In an optional design of the embodiment, the second measurement result includes at least one of following information of the reference signal:
a reference signal received power, a delay, a Doppler shift, channel information, a distance, a speed, an orientation, or acceleration.

In an optional design of the embodiment, the transceiver module 840 includes:
a transmitting unit 844, where the transmitting unit 844 is configured to transmit an activation indication of the configuration information to a second terminal, and the activation indication is used to activate the configuration information of the reference signal; and/or
the transmitting unit 844 is further configured to transmit a deactivation indication of the configuration information to the second terminal, and the deactivation indication is used to deactivate the configuration information of the reference signal.

In an optional design of the embodiment, the transceiver module 840 includes a transmitting unit 844.

The transmitting unit 844 is configured to transmit measurement reporting configuration to a second terminal, where the measurement reporting configuration is used to indicate that the second terminal reports a first measurement result in a case where the first measurement result meets a measurement reporting condition.

The first measurement result is obtained by the second terminal by performing measurement on the reference signal.

In an optional design of the embodiment, the measurement reporting configuration is further used to indicate that in a case where the first measurement result does not meet the measurement reporting condition, the second terminal does not report the first measurement result, and/or the second terminal reports indication information.

The indication information indicates that the first measurement result does not meet the measurement reporting condition.

In an optional design of the embodiment, the transceiver module 840 is further configured to:
transmit first request information, where the first request information is used to request terminal information of a second terminal; and
receive first response information transmitted from the second terminal, where the first response information carries the terminal information of the second terminal,
where the terminal information includes identity information of the second terminal and/or geographic location information of the second terminal.

In an optional design of the embodiment, the transceiver module 840 is further configured to:
transmit second request information, where the second request information is used to request a second terminal to perform measurement on the reference signal, and
receive a first measurement result transmitted from the second terminal, where the first measurement result is used for collaborative sensing or hybrid positioning.

In an optional design of the embodiment, the transceiver module 840 is further configured to: receive terminal information transmitted from the second terminal, where the terminal information includes identity information of the second terminal and/or geographic location information of the second terminal.

It shall be noted that when the apparatus provided in the above embodiments implements functions thereof, the description is made by taking the division of the above-mentioned various functional modules as an example. In actual applications, the above-mentioned functions may be assigned to different functional modules according to actual needs. That is, the content structure of the device may be divided into different functional modules to complete all or part of the functions described above.

Regarding the apparatuses in the above embodiments, a specific manner in which various modules perform operations has been described in detail in the method embodiments, which will not be repeated here.

FIG. 27 is a schematic diagram illustrating a structure of a communication device provided in an embodiment of the present disclosure. The communication device may include: a processor 2201, a receiver 2202, a transmitter 2203, a memory 2204, and a bus 2205.

The processor 2201 includes one or more processing cores. The processor 2201 executes various kinds of functional applications and information processing by running software programs and modules.

The receiver 2202 and the transmitter 2203 may be implemented as a transceiver, and the transceiver may be a communication chip.

The memory 2204 is connected to the processor 2201 through the bus 2205. Exemplarily, the processor 2201 may be implemented as a first IC chip, the processor 2201 and the memory 2204 may be implemented together as a second IC chip, and the first chip or the second chip may be an application specific integrated circuit (ASIC) chip.

The memory 2204 may be used to store at least one computer program, and the processor 2201 may be used to execute the at least one computer program to implement various steps performed by an access point multi-link device in the method embodiments.

In addition, the memory 2204 may be implemented by any type of volatile (transitory) or non-volatile (non-transitory) storage device or a combination thereof; and the volatile or non-volatile storage device includes but is not limited to: a random-access memory (RAM), a read-only memory (ROM), an erasable programmable read-only memory (EPROM), an electrically erasable programmable read-only memory (EEPROM), a flash or other solid-state storage technology, a compact disc read-only memory (CD-ROM), a high density digital video disc (DVD) or other optical storage, a tape cassette, a magnetic tape, a disk storage or other magnetic storage device.

The embodiments of the present disclosure further provide a computer-readable storage medium, having stored thereon a computer program. The computer program is used to be executed by a processor of a multi-link device, to implement the configuration method of the reference signal described above.

Optionally, the computer-readable storage medium may include: a read-only memory (ROM), a random-access memory (RAM), a solid-state drive (SSD), or an optical disk. The random access memories may include the resistance random access memory (ReRAM) and the dynamic random access memory (DRAM).

The embodiments of the present disclosure further provide a chip, including a programmable logic circuit and/or program instructions; and the chip, when being run on a multi-link device, implements the configuration method of the reference signal described above.

The embodiments of the present disclosure further provide a computer program product or a computer program, including computer instructions stored in a computer-readable storage medium. A processor of a multi-link device reads and executes the computer instructions from the computer-readable storage medium to implement the configuration method of the reference signal described above.

It shall be understood that the "indicate/indicated/indicating/indication" mentioned in the embodiments of the present disclosure may mean a direct indication or an indirect indication, or may mean that there is an associated relationship. For example, A indicating B may mean that A directly indicates B (for example, B may be obtained by A); alternatively, A indicating B may mean that A indirectly indicates B (for example, A indicates C, and B may be obtained by C); alternatively, A indicating B may also mean that there is an association relationship between A and B.

In the description of the embodiments of the present disclosure, the term "correspond/corresponding/correspondence" may indicate a direct correspondence or an indirect correspondence between the two, or may mean that there is an association relationship between the two, or may mean a relationship of indicating and being indicated, or a relationship of configuring and being configured.

The "multiple" mentioned herein refers to two or more. The "and/or" is an association relationship to describe associated objects, which indicates that three kinds of relationships may exist. For example, "A and/or B" may mean three cases as follows: A exists alone, both A and B exist, or B exists alone. The character "/" usually indicates that the associated objects before and after the "/" are in an "or" relationship.

In addition, the step numbers described herein only illustrate a possible execution order between the steps. In some other embodiments, the above steps may not be executed in an order base on the numbers. For example, two steps with different numbers are executed at the same time, or two steps with different numbers are executed in an opposite order to what shown in the drawing, which is not limited in the embodiments of the present disclosure.

Those skilled in the art should be aware that, in one or more of the above examples, the functions described in the embodiments of the present disclosure may be implemented with hardware, software, firmware or any combination thereof. When the functions are implemented with the software, these functions may be stored in a computer-readable medium or transmitted as one or more instructions or codes on the computer-readable medium. The computer-readable medium includes a computer storage medium and a communication medium. The communication medium includes any medium that facilitates a transfer of a computer program from one place to another. The storage medium may be any available medium that may be accessed by a general-purpose computer or a dedicated-purpose computer.

The above description is only exemplary embodiments of the present disclosure and is not intended to limit the present disclosure. Any modifications, equivalent substitutions, improvements, etc. made within the spirit and principle of the present disclosure shall be included in the protection scope of the present disclosure.

## Claims

1. A configuration method of a reference signal, performed by a first terminal, the method comprising:
transmitting configuration information of the reference signal to a target device, wherein
the reference signal is transmitted via a first link, and the target device is a device outside the first link.

2. The method according to claim 1, wherein the target device comprises a second terminal, and the first link is an uplink, wherein
transmitting the configuration information of the reference signal to the target device comprises:
transmitting first configuration and second configuration to the second terminal, wherein the first configuration is used to indicate a time-frequency resource for the first terminal transmitting the reference signal on the uplink; the second configuration is used to indicate configuration of a measurement gap, and the measurement gap is used to indicate a time window for the second terminal performing measurement on the reference signal.

3. The method according to claim 2, wherein transmitting the first configuration and the second configuration to the second terminal comprises:
transmitting the first configuration and the second configuration to the second terminal on a sidelink.

4. The method according to claim 2 or 3, wherein the first configuration comprises at least one of the following:
time-domain length information of the reference signal, a time-domain starting position of the reference signal, a frequency-domain starting position of the reference signal, or a transmission period of the reference signal.

5. The method according to any one of claims 2 to 4, wherein the second configuration comprises at least one of the following:
a length of the measurement gap, a repetition period of the measurement gap, a timing advance of the measurement gap, or a time-domain offset of the measurement gap, wherein
the second terminal performs the measurement on the reference signal within the measurement gap.

6. The method according to claim 1, wherein the target device comprises a first network element or a second network element, and the first link is a sidelink, wherein
transmitting the configuration information of the reference signal to the target device comprises:
transmitting resource configuration of the reference signal to the first network element or the second network element, wherein the resource configuration of the reference signal is used to indicate a time-frequency resource for the first terminal transmitting the reference signal on the sidelink.

7. The method according to claim 6, wherein transmitting the resource configuration of the reference signal to the first network element or the second network element comprises:
transmitting the resource configuration of the reference signal to the first network element or the second network element on an uplink.

8. The method according to any one of claims 1 to 6, further comprising:
transmitting an activation indication of the configuration information to a second terminal, wherein the activation indication is used to activate the configuration information of the reference signal; and/or
transmitting a deactivation indication of the configuration information to the second terminal, wherein the deactivation indication is used to deactivate the configuration information of the reference signal.

9. The method according to any one of claims 1 to 6, further comprising:
transmitting measurement reporting configuration to a second terminal, wherein the measurement reporting configuration is used to indicate that the second terminal reports a first measurement result in a case where the first measurement result meets a measurement reporting condition, wherein
the first measurement result is obtained by the second terminal by performing measurement on the reference signal.

10. The method according to claim 9, wherein the measurement reporting configuration is further used to indicate that in a case where the first measurement result does not meet the measurement reporting condition, the second terminal does not report the first measurement result, and/or the second terminal reports indication information, wherein
the indication information indicates that the first measurement result does not meet the measurement reporting condition.

11. The method according to any one of claims 1 to 6, wherein the reference signal is used for collaborative sensing or hybrid positioning.

12. A configuration method of a reference signal, performed by a second terminal, the method comprising:
transmitting or receiving configuration information of the reference signal, wherein
the reference signal is transmitted via a first link, and a target device receiving the configuration information is a device outside the first link.

13. The method according to claim 12, wherein the target device comprises the second terminal, and the first link is an uplink, wherein
receiving the configuration information of the reference signal comprises:
receiving first configuration and second configuration, wherein the first configuration is used to indicate a time-frequency resource for a first terminal transmitting the reference signal; and the second configuration is used to indicate configuration of a measurement gap, and the measurement gap is used to indicate a time window for the second terminal performing measurement on the reference signal.

14. The method according to claim 13, wherein the first configuration comprises at least one of the following:
time-domain length information of the reference signal, a time-domain starting position of the reference signal, a frequency-domain starting position of the reference signal, or a transmission period of the reference signal.

15. The method according to claim 13 or 14, wherein the second configuration comprises at least one of the following:
a length of the measurement gap, a repetition period of the measurement gap, a timing advance of the measurement gap, or a time-domain offset of the measurement gap, wherein
the second terminal performs the measurement on the reference signal within the measurement gap.

16. The method according to any one of claims 13 to 15, further comprising:
performing the measurement on the reference signal based on the first configuration and the second configuration to obtain a first measurement result; and
transmitting the first measurement result to a first network element.

17. The method according to claim 16, wherein the first measurement result comprises at least one of following information of the reference signal:
a reference signal received power, a delay, a Doppler shift, channel information, a distance, a speed, an orientation, or acceleration.

18. The method according to any one of claims 13 to 15, wherein the first configuration and the second configuration are transmitted from a second network element.

19. The method according to claim 12, wherein the target device comprises a first network element or a second network element, and the first link is a sidelink, wherein
transmitting the configuration information of the reference signal comprises:
transmitting resource configuration of the reference signal to the first network element or the second network element, wherein the resource configuration of the reference signal is used to indicate a time-frequency resource for a first terminal transmitting the reference signal.

20. The method according to any one of claims 12 to 19, further comprising:
receiving an activation indication of the configuration information, wherein the activation indication is used to activate the configuration information of the reference signal; and/or
receiving a deactivation indication of the configuration information, wherein the deactivation indication is used to deactivate the configuration information of the reference signal.

21. The method according to any one of claims 12 to 19, further comprising:
receiving measurement reporting configuration, wherein the measurement reporting configuration is used to indicate that the second terminal reports a first measurement result in a case where the first measurement result meets a measurement reporting condition;
performing measurement on the reference signal to obtain the first measurement result; and
reporting the first measurement result in the case where the first measurement result meets the measurement reporting condition.

22. The method according to claim 21, further comprising:
in a case where the first measurement result does not meet the measurement reporting condition, not reporting the first measurement result; and/or in the case where the first measurement result does not meet the measurement reporting condition, reporting indication information, wherein
the indication information indicates that the first measurement result does not meet the measurement reporting condition.

23. The method according to any one of claims 12 to 19, further comprising:
receiving first request information transmitted from a second network element, wherein the first request information is used to request terminal information of the second terminal; and
transmitting first response information to the second network element, wherein the first response information carries the terminal information of the second terminal, wherein
the terminal information comprises identity information of the second terminal and/or geographic location information of the second terminal.

24. The method according to any one of claims 12 to 19, further comprising:
receiving second request information transmitted from a second network element, wherein the second request information is used to request the second terminal to perform measurement on the reference signal;
performing the measurement on the reference signal based on first configuration and second configuration to obtain a first measurement result; and
transmitting the first measurement result to the second network element, wherein the first measurement result is used for collaborative sensing or hybrid positioning.

25. The method according to claim 24, further comprising:
transmitting terminal information of the second terminal to the second network element, wherein the terminal information comprises identity information of the second terminal and/or geographic location information of the second terminal.

26. A configuration method of a reference signal, performed by a first network element or a second network element, the method comprising:
transmitting or receiving configuration information of the reference signal, wherein
the reference signal is transmitted via a first link, and a target device receiving the configuration information is a device outside the first link.

27. The method according to claim 26, wherein the target device comprises a second terminal, and the first link is an uplink, wherein
transmitting the configuration information of the reference signal comprises:
transmitting first configuration and second configuration to the second terminal, wherein the first configuration is used to indicate a time-frequency resource for a first terminal transmitting the reference signal; the second configuration is used to indicate configuration of a measurement gap, and the measurement gap is used to indicate a time window for the second terminal performing measurement on the reference signal.

28. The method according to claim 27, wherein the first configuration comprises at least one of the following:
time-domain length information of the reference signal, a time-domain starting position of the reference signal, a frequency-domain starting position of the reference signal, or a transmission period of the reference signal.

29. The method according to claim 27 or 28, wherein the second configuration comprises at least one of the following:
a length of the measurement gap, a repetition period of the measurement gap, a timing advance of the measurement gap, or a time-domain offset of the measurement gap, wherein
the second terminal performs the measurement on the reference signal within the measurement gap.

30. The method according to any one of claims 27 to 29, wherein the method is performed by the first network element, and further comprises:
receiving a first measurement result, wherein the first measurement result is obtained by the second terminal by performing the measurement on the reference signal based on the first configuration and the second configuration; and
reporting the first measurement result to the second network element.

31. The method according to claim 30, wherein the first measurement result comprises at least one of following information of the reference signal:
a reference signal received power, a delay, a Doppler shift, channel information, a distance, a speed, an orientation, or acceleration.

32. The method according to claim 26, wherein the target device comprises the first network element or the second network element, and the first link is a sidelink, wherein
receiving the configuration information of the reference signal comprises:
receiving resource configuration of the reference signal, wherein the resource configuration of the reference signal is used to indicate a time-frequency resource for a first terminal transmitting the reference signal.

33. The method according to claim 32, further comprising:
performing measurement on the reference signal based on the resource configuration of the reference signal to obtain a second measurement result.

34. The method according to claim 33, wherein the second measurement result comprises at least one of following information of the reference signal:
a reference signal received power, a delay, a Doppler shift, channel information, a distance, a speed, an orientation, or acceleration.

35. The method according to any one of claims 26 to 34, further comprising:
transmitting an activation indication of the configuration information to a second terminal, wherein the activation indication is used to activate the configuration information of the reference signal; and/or
transmitting a deactivation indication of the configuration information to the second terminal, wherein the deactivation indication is used to deactivate the configuration information of the reference signal.

36. The method according to any one of claims 26 to 34, further comprising:
transmitting measurement reporting configuration to a second terminal, wherein the measurement reporting configuration is used to indicate that the second terminal reports a first measurement result in a case where the first measurement result meets a measurement reporting condition, wherein
the first measurement result is obtained by the second terminal by performing measurement on the reference signal.

37. The method according to claim 36, wherein the measurement reporting configuration is further used to indicate that in a case where the first measurement result does not meet the measurement reporting condition, the second terminal does not report the first measurement result, and/or the second terminal reports indication information, wherein
the indication information indicates that the first measurement result does not meet the measurement reporting condition.

38. The method according to any one of claims 26 to 34, wherein the method is performed by the second network element, and further comprises:
transmitting first request information, wherein the first request information is used to request terminal information of a second terminal; and
receiving first response information transmitted from the second terminal, wherein the first response information carries the terminal information of the second terminal, wherein
the terminal information comprises identity information of the second terminal and/or geographic location information of the second terminal.

39. The method according to any one of claims 26 to 34, wherein the method is performed by the second network element, and further comprises:
transmitting second request information, wherein the second request information is used to request a second terminal to perform measurement on the reference signal; and
receiving a first measurement result transmitted from the second terminal, wherein the first measurement result is used for collaborative sensing or hybrid positioning.

40. The method according to claim 39, further comprising:
receiving terminal information transmitted from the second terminal, wherein the terminal information comprises identity information of the second terminal and/or geographic location information of the second terminal.

41. A configuration apparatus of a reference signal, comprising:
a transmitting module, configured to transmit configuration information of the reference signal to a target device, wherein
the reference signal is transmitted via a first link, and the target device is a device outside the first link.

42. The apparatus according to claim 41, wherein the target device comprises a second terminal, and the first link is an uplink, wherein
the transmitting module is further configured to:
transmit first configuration and second configuration to the second terminal, wherein the first configuration is used to indicate a time-frequency resource for a first terminal transmitting the reference signal on the uplink; the second configuration is used to indicate configuration of a measurement gap, and the measurement gap is used to indicate a time window for the second terminal performing measurement on the reference signal.

43. The apparatus according to claim 42, wherein the transmitting module is further configured to:
transmit the first configuration and the second configuration to the second terminal on a sidelink.

44. The apparatus according to claim 42 or 43, wherein the first configuration comprises at least one of the following:
time-domain length information of the reference signal, a time-domain starting position of the reference signal, a frequency-domain starting position of the reference signal, or a transmission period of the reference signal.

45. The apparatus according to any one of claims 42 to 44, wherein the second configuration comprises at least one of the following:
a length of the measurement gap, a repetition period of the measurement gap, a timing advance of the measurement gap, or a time-domain offset of the measurement gap, wherein
the second terminal performs the measurement on the reference signal within the measurement gap.

46. The apparatus according to claim 41, wherein the target device comprises a first network element or a second network element, and the first link is a sidelink, wherein
the transmitting module is further configured to:
transmit resource configuration of the reference signal to the first network element or the second network element, wherein the resource configuration of the reference signal is used to indicate a time-frequency resource for a first terminal transmitting the reference signal on the sidelink.

47. The apparatus according to claim 46, wherein the transmitting module is further configured to:
transmit the resource configuration of the reference signal to the first network element or the second network element on an uplink.

48. The apparatus according to any one of claims 41 to 46, wherein the transmitting module is further configured to:
transmit an activation indication of the configuration information to a second terminal, wherein the activation indication is used to activate the configuration information of the reference signal; and/or
transmit a deactivation indication of the configuration information to the second terminal, wherein the deactivation indication is used to deactivate the configuration information of the reference signal.

49. The apparatus according to any one of claims 41 to 46, wherein the transmitting module is further configured to:
transmit measurement reporting configuration to a second terminal, wherein the measurement reporting configuration is used to indicate that the second terminal reports a first measurement result in a case where the first measurement result meets a measurement reporting condition, wherein
the first measurement result is obtained by the second terminal by performing measurement on the reference signal.

50. The apparatus according to claim 49, wherein the measurement reporting configuration is further used to indicate that in a case where the first measurement result does not meet the measurement reporting condition, the second terminal does not report the first measurement result, and/or, the second terminal reports indication information, wherein
the indication information indicates that the first measurement result does not meet the measurement reporting condition.

51. The apparatus according to any one of claims 41 to 46, wherein the reference signal is used for collaborative sensing or hybrid positioning.

52. A configuration apparatus of a reference signal, comprising:
a transceiver module, configured to transmit or receive configuration information of the reference signal, wherein
the reference signal is transmitted via a first link, and a target device receiving the configuration information is a device outside the first link.

53. The apparatus according to claim 52, wherein the target device comprises a second terminal, and the first link is an uplink, wherein
the transceiver module comprises:
a receiving unit, configured to receive first configuration and second configuration, wherein the first configuration is used to indicate a time-frequency resource for a first terminal transmitting the reference signal; and the second configuration is used to indicate configuration of a measurement gap, and the measurement gap is used to indicate a time window for the second terminal performing measurement on the reference signal.

54. The apparatus according to claim 53, wherein the first configuration comprises at least one of the following:
time-domain length information of the reference signal, a time-domain starting position of the reference signal, a frequency-domain starting position of the reference signal, or a transmission period of the reference signal.

55. The apparatus according to claim 53 or 54, wherein the second configuration comprises at least one of the following:
a length of the measurement gap, a repetition period of the measurement gap, a timing advance of the measurement gap, or a time-domain offset of the measurement gap, wherein
the second terminal performs the measurement on the reference signal within the measurement gap.

56. The apparatus according to any one of claims 53 to 55, further comprising:
a measuring module, configured to perform the measurement on the reference signal based on the first configuration and the second configuration to obtain a first measurement result, wherein
the transceiver module comprises a transmitting unit configured to transmit the first measurement result to a first network element.

57. The apparatus according to claim 56, wherein the first measurement result comprises at least one of following information of the reference signal:
a reference signal received power, a delay, a Doppler shift, channel information, a distance, a speed, an orientation, or acceleration.

58. The apparatus according to any one of claims 53 to 55, wherein the first configuration and the second configuration are transmitted from a second network element.

59. The apparatus according to claim 52, wherein the target device comprises a first network element or a second network element, and the first link is a sidelink, wherein
the transceiver module comprises:
a transmitting unit, configured to transmit resource configuration of the reference signal to the first network element or the second network element, wherein the resource configuration of the reference signal is used to indicate a time-frequency resource for a first terminal transmitting the reference signal.

60. The apparatus according to any one of claims 52 to 59, wherein the transceiver module comprises:
a receiving unit, wherein the receiving unit is configured to receive an activation indication of the configuration information, and the activation indication is used to activate the configuration information of the reference signal; and/or
the receiving unit is further configured to receive a deactivation indication of the configuration information, and the deactivation indication is used to deactivate the configuration information of the reference signal.

61. The apparatus according to any one of claims 52 to 59, wherein the transceiver module comprises:
a receiving unit, configured to receive measurement reporting configuration, wherein the measurement reporting configuration is used to indicate that a second terminal reports a first measurement result in a case where the first measurement result meets a measurement reporting condition, wherein
the apparatus further comprises a measuring module, configured to perform measurement on the reference signal to obtain the first measurement result; and
the transceiver module comprises a transmitting unit, configured to report the first measurement result in the case where the first measurement result meets the measurement reporting condition.

62. The apparatus according to claim 61, wherein the transmitting unit is further configured to:
in a case where the first measurement result does not meet the measurement reporting condition, not report the first measurement result; and/or in the case where the first measurement result does not meet the measurement reporting condition, report indication information, wherein
the indication information indicates that the first measurement result does not meet the measurement reporting condition.

63. The apparatus according to any one of claims 52 to 59, wherein the transceiver module is further configured to:
receive first request information transmitted from a second network element, wherein the first request information is used to request terminal information of a second terminal; and
transmit first response information to the second network element, wherein the first response information carries the terminal information of the second terminal, wherein
the terminal information comprises identity information of the second terminal and/or geographic location information of the second terminal.

64. The apparatus according to any one of claims 52 to 59, wherein the transceiver module is further configured to:
receive second request information transmitted from a second network element, wherein the second request information is used to request a second terminal to perform measurement on the reference signal;
perform the measurement on the reference signal based on first configuration and second configuration to obtain a first measurement result; and
transmit the first measurement result to the second network element, wherein the first measurement result is used for collaborative sensing or hybrid positioning.

65. The apparatus according to claim 64, wherein the transceiver module is further configured to:
transmit terminal information of the second terminal to the second network element, wherein the terminal information comprises identity information of the second terminal and/or geographic location information of the second terminal.

66. A configuration apparatus of a reference signal, comprising:
a transceiver module, configured to transmit or receive configuration information of the reference signal, wherein
the reference signal is transmitted via a first link, and a target device receiving the configuration information is a device outside the first link.

67. The apparatus according to claim 66, wherein the target device comprises a second terminal, and the first link is an uplink, wherein
the transceiver module comprises:
a transmitting unit, configured to transmit first configuration and second configuration to the second terminal, wherein the first configuration is used to indicate a time-frequency resource for a first terminal transmitting the reference signal; the second configuration is used to indicate configuration of a measurement gap, and the measurement gap is used to indicate a time window for the second terminal performing measurement on the reference signal.

68. The apparatus according to claim 67, wherein the first configuration comprises at least one of the following:
time-domain length information of the reference signal, a time-domain starting position of the reference signal, a frequency-domain starting position of the reference signal, or a transmission period of the reference signal.

69. The apparatus according to claim 67 or 68, wherein the second configuration comprises at least one of the following:
a length of the measurement gap, a repetition period of the measurement gap, a timing advance of the measurement gap, or a time-domain offset of the measurement gap, wherein
the second terminal performs the measurement on the reference signal within the measurement gap.

70. The apparatus according to any one of claims 67 to 69, wherein the transceiver module comprises:
a receiving unit, configured to receive a first measurement result, wherein the first measurement result is obtained by the second terminal by performing the measurement on the reference signal based on the first configuration and the second configuration, wherein
the transmitting unit is further configured to report the first measurement result to a second network element.

71. The apparatus according to claim 70, wherein the first measurement result comprises at least one of following information of the reference signal:
a reference signal received power, a delay, a Doppler shift, channel information, a distance, a speed, an orientation, or acceleration.

72. The apparatus according to claim 66, wherein the target device comprises the first network element or the second network element, and the first link is a sidelink, wherein
the transceiver module comprises:
a receiving unit, configured to receive resource configuration of the reference signal, wherein the resource configuration of the reference signal is used to indicate a time-frequency resource for a first terminal transmitting the reference signal.

73. The apparatus according to claim 72, further comprising:
a measuring module, configured to perform measurement on the reference signal based on the resource configuration of the reference signal to obtain a second measurement result.

74. The apparatus according to claim 73, wherein the second measurement result comprises at least one of following information of the reference signal:
a reference signal received power, a delay, a Doppler shift, channel information, a distance, a speed, an orientation, or acceleration.

75. The apparatus according to any one of claims 66 to 74, wherein the transceiver module comprises:
a transmitting unit, wherein the transmitting unit is configured to transmit an activation indication of the configuration information to a second terminal, and the activation indication is used to activate the configuration information of the reference signal; and/or
the transmitting unit is further configured to transmit a deactivation indication of the configuration information to the second terminal, and the deactivation indication is used to deactivate the configuration information of the reference signal.

76. The apparatus according to any one of claims 66 to 74, wherein the transceiver module comprises:
a transmitting unit, configured to transmit measurement reporting configuration to a second terminal, wherein the measurement reporting configuration is used to indicate that the second terminal reports a first measurement result in a case where the first measurement result meets a measurement reporting condition, wherein
the first measurement result is obtained by the second terminal by performing measurement on the reference signal.

77. The apparatus according to claim 76, wherein the measurement reporting configuration is further used to indicate that in a case where the first measurement result does not meet the measurement reporting condition, the second terminal does not report the first measurement result, and/or the second terminal reports indication information, wherein
the indication information indicates that the first measurement result does not meet the measurement reporting condition.

78. The apparatus according to any one of claims 66 to 74, wherein the transceiver module is further configured to:
transmit first request information, wherein the first request information is used to request terminal information of a second terminal; and
receive first response information transmitted from the second terminal, wherein the first response information carries the terminal information of the second terminal, wherein
the terminal information comprises identity information of the second terminal and/or geographic location information of the second terminal.

79. The apparatus according to any one of claims 66 to 74, wherein the transceiver module is further configured to:
transmit second request information, wherein the second request information is used to request a second terminal to perform measurement on the reference signal; and
receive a first measurement result transmitted from the second terminal, wherein the first measurement result is used for collaborative sensing or hybrid positioning.

80. The apparatus according to claim 79, wherein the transceiver module is further configured to:
receive terminal information transmitted from the second terminal, wherein the terminal information comprises identity information of the second terminal and/or geographic location information of the second terminal.

81. A communication device, comprising a processor and a memory, wherein the memory has stored at least one segment of program therein; and the processor is configured to execute the at least one segment of program in the memory to implement the configuration method of the reference signal according to any one of claims 1 to 40.

82. A computer-readable storage medium, having stored a computer program therein, wherein the computer program is configured to be executed by a processor to implement the configuration method of the reference signal according to any one of claims 1 to 40.

83. A chip, comprising a programmable logic circuit and/or program instructions, wherein the chip, when being run, implements the configuration method of the reference signal according to any one of claims 1 to 40.

84. A computer program product or a computer program, comprising computer instructions stored in a computer-readable storage medium, wherein a processor reads and executes the computer instructions from the computer-readable storage medium to implement the configuration method of the reference signal according to any one of claims 1 to 40.
